(19)

**Europäisches Patentamt**
**European Patent Office**
**Office européen des brevets**

(11) **EP 4 336 700 B1**

(12) **EUROPEAN PATENT SPECIFICATION**

(45) Date of publication and mention
of the grant of the patent:
**22.04.2026 Bulletin 2026/17**

(21) Application number: **22918332.2**

(22) Date of filing: **07.12.2022**

(51) International Patent Classification (IPC):
*H02J 7/00* *(2026.01)*

(52) Cooperative Patent Classification (CPC):
**H02J 7/663**

(86) International application number:
**PCT/CN2022/137155**

(87) International publication number:
**WO 2023/130880 (13.07.2023 Gazette 2023/28)**

(54) **CHARGING CIRCUIT, ELECTRONIC DEVICE AND CHARGING SYSTEM**

LADESCHALTUNG, ELEKTRONISCHE VORRICHTUNG UND LADESYSTEM

CIRCUIT DE CHARGE, DISPOSITIF ÉLECTRONIQUE ET SYSTÈME DE CHARGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.01.2022 CN 202210015340**

(43) Date of publication of application:
**13.03.2024 Bulletin 2024/11**

(73) Proprietor: **Honor Device Co., Ltd.
Shenzhen, Guangdong 518040 (CN)**

(72) Inventors:
• **ZHANG, Ziqi
Shenzhen, Guangdong 518040 (CN)**

• **SUN, Ni
Shenzhen, Guangdong 518040 (CN)**
• **HUANG, Song
Shenzhen, Guangdong 518040 (CN)**

(74) Representative: **Epping - Hermann - Fischer
Patentanwaltsgesellschaft mbH
Schloßschmidstraße 5
80639 München (DE)**

(56) References cited:
**CN-A- 113 162 160      CN-U- 208 754 025
CN-U- 214 380 095      JP-A- 2004 354 518
US-A1- 2020 395 846    US-B2- 8 675 326**

EP 4 336 700 B1

## Description

### TECHNICAL FIELD

This application relates to the field of electronic circuit technologies, and in particular, to a charging circuit, an electronic device, and a charging system.

### BACKGROUND

Currently, electronic devices such as a mobile phone and a tablet computer all have a bidirectional charging function. For example, a smartphone can not only receive power from an external power supply (referred to as forward charging below), but also charge another electronic device connected to the smartphone (referred to as reverse charging below).

An existing charging circuit that can implement bidirectional charging includes a first silicon-based metal-oxide-semiconductor field-effect transistor (Silicon-based metal oxide semiconductor field effect transistor, Si MOS) and a second Si MOS transistor. In forward charging and reverse charging processes, both the first Si MOS transistor and the second Si MOS transistor are in an on state. However, the first Si MOS transistor and the second Si MOS transistor have relatively large on impedance, which not only causes heating of the electronic device, but also limits overall working efficiency of the charging circuit.

US 2020/0395846 A1 relates to a charge-pump control circuit comprising a first charge pump driver configured to supply a first gate voltage to a discharging transistor in order to control discharging from a battery; a second charge pump driver configured to supply a second gate voltage to a charging transistor in order to control charging to the battery; an oscillator configured to supply a clock for driving the first charge pump and the second charge pump, respectively; and a drive control circuit configured to set a control target voltage as one of the first gate voltage and the second gate voltage having a lower voltage and control generation of the clock by the oscillator according to the control target voltage.

### SUMMARY

This application provides an electronic device, and a charging system, to reduce on impedance of the charging circuit and improve overall working efficiency of the charging circuit. The invention is set out in the appended claims.

To achieve the foregoing objective, this application provides the following technical solutions: According to a first aspect, this application discloses a charging circuit, including:
a switch circuit, a voltage divider circuit, and a gate driver. The switch circuit is separately connected to the voltage divider circuit and the gate driver, and the voltage divider circuit is connected to the gate driver. The switch circuit is configured to: receive a power supply voltage and a plurality of drive voltages, and output a reference voltage and an output voltage of the charging circuit, where the plurality of drive voltages include a first drive voltage and a second drive voltage. The voltage divider circuit is configured to: receive the second drive voltage and the reference voltage, and output the first drive voltage. The gate driver is configured to: receive the reference voltage, and output the second drive voltage. A voltage value of the second drive voltage is different from a voltage value of the first drive voltage. The switch circuit can obtain the first drive voltage and the second drive voltage with different voltage values by using the gate driver and the voltage divider circuit, and further, there are two different types of switching transistors in the switch circuit. Therefore, two different drive voltages adapted to the switching transistors may be used, to reduce on impedance of the charging circuit and improve bidirectional charging efficiency of the charging circuit.

In a possible implementation, when receiving the second drive voltage and the reference voltage, and outputting the first drive voltage, the voltage divider circuit is configured to: receive the second drive voltage and the reference voltage, and separately perform voltage division on the second drive voltage and the reference voltage to obtain the first drive voltage.

In another possible implementation, when receiving the second drive voltage and the reference voltage, and outputting the first drive voltage, the voltage divider circuit is configured to: receive the second drive voltage and the reference voltage, and perform voltage division on the second drive voltage and the reference voltage to obtain the first drive voltage.

In another possible implementation, the voltage divider circuit includes a first resistor and a second resistor. A first terminal of the first resistor receives the reference voltage, and the first terminal of the first resistor is connected to a first terminal of the second resistor. The first terminal of the second resistor receives the second drive voltage, and a common terminal between the first resistor and the second resistor outputs the first drive voltage.

In another possible implementation, when receiving the reference voltage, and outputting the second drive voltage, the gate driver is configured to: receive the reference voltage, adjust the second drive voltage based on the reference voltage, and output the second drive voltage.

In another possible implementation, when receiving the reference voltage, and outputting the second drive voltage, the gate driver is configured to: adjust the second drive voltage to a first target drive value based on the reference voltage and output the second drive voltage in a forward charging time period or a reverse charging time period. When the second drive voltage is adjusted to the first target drive value, the second drive voltage is used to control a switching transistor in the switch circuit to be turned on.

In another possible implementation, the first target drive value is a sum of the reference voltage and a first drive value.

In another possible implementation, the gate driver is further configured to: adjust the second drive voltage to a second target drive value based on the reference voltage and output the second drive voltage in a forward turn-off time period or a reverse turn-off time period. When the second drive voltage is adjusted to the second target drive value, the second drive voltage is used to control a switching transistor in the switch circuit to be turned off.

In another possible implementation, the second target drive value is equal to the reference voltage.

In another possible implementation, when receiving the power supply voltage and the plurality of drive voltages, and outputting the reference voltage and the output voltage of the charging circuit, the switch circuit is configured to: receive the power supply voltage and the plurality of drive voltages and output the reference voltage and the output voltage of the charging circuit under control of the plurality of drive voltages in the forward charging time period or the reverse charging time period.

In another possible implementation, when receiving the power supply voltage and the plurality of drive voltages and outputting the reference voltage and the output voltage of the charging circuit under control of the plurality of drive voltages in the forward charging time period or the reverse charging time period, the switch circuit is configured to:

receive an external voltage and the plurality of drive voltages and output the reference voltage and an internal voltage under control of the plurality of drive voltages in the forward charging time period; and
receive the internal voltage and the plurality of drive voltages and output the reference voltage and the external voltage under control of the plurality of drive voltages in the reverse charging time period. The power supply voltage is the external voltage in the forward charging time period, and is the internal voltage in the reverse charging time period. The output voltage of the charging circuit is the internal voltage in the forward charging time period, and is the external voltage in the reverse charging time period. The external voltage is a voltage of an external node in the charging circuit, and the internal voltage is a voltage of an internal node in the charging circuit.

In another possible implementation, the switch circuit is further configured to:
receive the power supply voltage and the plurality of drive voltages and stop outputting the reference voltage and the output voltage of the charging circuit under control of the plurality of drive voltages in the forward turn-off time period or the reverse turn-off time period.

In another possible implementation, when receiving the power supply voltage and the plurality of drive voltages and stopping outputting the reference voltage and the output voltage of the charging circuit under control of the plurality of drive voltages in the forward turn-off time period or the reverse turn-off time period, the switch circuit is configured to: receive the external voltage and the plurality of drive voltages and stop outputting the reference voltage of the charging circuit and the internal voltage under control of the plurality of drive voltages in the forward turn-off time period; and receive the internal voltage and the plurality of drive voltages and stop outputting the reference voltage and the external voltage under control of the plurality of drive voltages in the reverse turn-off time period. The power supply voltage is the external voltage in the forward turn-off time period, and is the internal voltage in the reverse turn-off time period, the output voltage of the charging circuit is the internal voltage in the forward turn-off time period, and is the external voltage in the reverse turn-off time period, the external voltage is the voltage of the external node in the charging circuit, and the internal voltage is the voltage of the internal node in the charging circuit.

In another possible implementation, the switch circuit includes a first switching transistor and a second switching transistor, and when receiving the external voltage and the plurality of drive voltages and outputting the reference voltage and the internal voltage under control of the plurality of drive voltages in the forward charging time period, the switch circuit is configured to:

receive the external voltage and the plurality of drive voltages and output the reference voltage and the internal voltage by using the turned-on first switching transistor and the turned-on second switching transistor in the forward charging time period, where the first switching transistor is turned on under control of the first drive voltage, and the second switching transistor is turned on under control of the second drive voltage; and
when receiving the internal voltage and the plurality of drive voltages and outputting the reference voltage and the external voltage under control of the plurality of drive voltages in the reverse charging time period, the switch circuit is configured to:
receive the internal voltage and the plurality of drive voltages and output the reference voltage and the external voltage by using the turned-on first switching transistor and the turned-on second switching transistor in the reverse charging time period, where the first switching transistor is turned on under control of the first drive voltage, and the second switching transistor is turned on under control of the second drive voltage.

In another possible implementation, the switch circuit includes a first switching transistor and a second switching transistor, and when receiving the external voltage and the plurality of drive voltages and stopping outputting the reference voltage of the charging circuit and the internal voltage under control of the plurality of drive voltages in the forward turn-off time period, the switch circuit is configured to:

receive the external voltage and the plurality of drive voltages and stop outputting the reference voltage and the internal voltage by using the turned-off first switching transistor and the turned-off second switching transistor in the forward turn-off time period, where the first switching transistor is turned off under control of the first drive voltage, and the second switching transistor is turned off under control of the second drive voltage; and
when receiving the internal voltage and the plurality of drive voltages and stopping outputting the reference voltage and the external voltage under control of the plurality of drive voltages in the reverse turn-off time period, the switch circuit is configured to:
receive the internal voltage and the plurality of drive voltages and stop outputting the reference voltage and the external voltage by using the turned-off first switching transistor and the turned-off second switching transistor in the reverse turn-off time period, where the first switching transistor is turned off under control of the first drive voltage, and the second switching transistor is turned off under control of the second drive voltage.

In another possible implementation, a control terminal of the first switching transistor receives the first drive voltage, a first terminal of the first switching transistor is an external node, and a second terminal of the first switching transistor is connected to a first terminal of the second switching transistor. A control terminal of the second switching transistor receives the second drive voltage, and the first terminal of the second switching transistor outputs the reference voltage. A second terminal of the second switching transistor is an internal node, a voltage of the external node is the external voltage, and a voltage of the internal node is the internal voltage.

In another possible implementation, the switch circuit includes a first switching transistor and a second switching transistor, and when receiving the external voltage and the plurality of drive voltages and outputting the reference voltage and the internal voltage under control of the plurality of drive voltages in the forward charging time period, the switch circuit is configured to:

receive the external voltage and the plurality of drive voltages, output the internal voltage by using the turned-on first switching transistor, and output the reference voltage by using the turned-on second switching transistor in the forward charging time period, where the first switching transistor is turned on under control of the first drive voltage, and the second switching transistor is turned on under control of the second drive voltage; and
when receiving the internal voltage and the plurality of drive voltages and outputting the reference voltage and the external voltage under control of the plurality of drive voltages in the reverse charging time period, the switch circuit is configured to:
receive the internal voltage and the plurality of drive voltages, output the external voltage by using the turned-on first switching transistor, and output the reference voltage by using the turned-on second switching transistor in the reverse charging time period, where the first switching transistor is turned on under control of the first drive voltage, and the second switching transistor is turned on under control of the second drive voltage.

In another possible implementation, when receiving the power supply voltage and the plurality of drive voltages and stopping outputting the reference voltage and the output voltage of the charging circuit under control of the plurality of drive voltages in the forward turn-off time period or the reverse turn-off time period, the switch circuit is configured to:

receive the external voltage and the plurality of drive voltages, stop outputting the internal voltage by using the turned-off first switching transistor, and stop outputting the reference voltage by using the turned-off second switching transistor in the forward turn-off time period, where the first switching transistor is turned off under control of the first drive voltage, and the second switching transistor is turned off under control of the second drive voltage; and
when receiving the internal voltage and the plurality of drive voltages and stopping outputting the reference voltage and the external voltage under control of the plurality of drive voltages in the reverse turn-off time period, the switch circuit is configured to:
receive the internal voltage and the plurality of drive voltages, stop outputting the external voltage by using the turned-off first switching transistor, and stop outputting the reference voltage by using the turned-off second switching transistor in the reverse turn-off time period, where the first switching transistor is turned off under control of the first drive voltage, and the second switching transistor is turned off under control of the second drive voltage.

**In** another possible implementation, the switch circuit further includes:
a third resistor. A first terminal of the first switching transistor is an external node, a second terminal of the first switching transistor is an internal node, and a control terminal of the first switching transistor receives the first drive voltage. A first terminal of the second switching transistor is grounded by using the third resistor, a second terminal of the second switching transistor is connected to the second terminal of the first switching transistor, a control terminal of the second switching transistor receives the second drive voltage, and the first terminal of the second switching transistor outputs the reference voltage. A voltage of the external node is the external voltage, and a voltage of the internal node is the internal voltage.

According to a second aspect, this application discloses an electronic device, including:
a charging management module, where the charging management module includes the charging circuit according to any one of the implementations of the first aspect.

According to a third aspect, this application discloses a charging system. The charging system includes at least a first electronic device, the first electronic device includes a charging management module, and the charging management module includes the charging circuit according to any one of the implementations of the first aspect. The charging system further includes a charger connected to the first electronic device and/or a second electronic device connected to the first electronic device. The charger connected to the first electronic device is configured to output a power supply voltage to the first electronic device, and the second electronic device connected to the first electronic device is configured to receive an output voltage of the charging circuit.

## BRIEF DESCRIPTION OF DRAWINGS

FIG. 1A is a diagram of a structure of a charging circuit 101;

FIG. 1B is a schematic diagram of a scenario in which a charging circuit 101 is applied to a forward charging scenario;

FIG. 1C is a schematic diagram of a scenario in which a charging circuit 101 is applied to a reverse charging scenario;

FIG. 2A is a diagram of a structure of a charging circuit 200 according to an embodiment of this application;

FIG. 2B is a schematic diagram of a scenario in which a charging circuit 200 is applied to a forward charging scenario;

FIG. 2C is a line chart of a change of an internal voltage when a charging circuit 200 is applied to the scenario shown in FIG. 2B;

FIG. 2D is a schematic diagram of a scenario in which a charging circuit 200 is applied to a reverse charging scenario;

FIG. 2E is a line chart of a change of an internal voltage when a charging circuit 200 is applied to the scenario shown in FIG. 2D;

FIG. 3A is a diagram of a structure of a charging circuit 300 according to an example of this application, which is not within the scope of the invention;

FIG. 3B is a schematic diagram of a scenario in which a charging circuit 300 is applied to a forward charging scenario;

FIG. 3C is a line chart of a change of an internal voltage when a charging circuit 300 is applied to the scenario shown in FIG. 3C;

FIG. 3D is a schematic diagram of a scenario in which a charging circuit 300 is applied to a reverse charging scenario;

FIG. 3E is a line chart of a change of an internal voltage when a charging circuit 300 is applied to the scenario shown in FIG. 3D; and

FIG. 4 is a diagram of a hardware structure of an electronic device 400.

## DESCRIPTION OF EMBODIMENTS

The terms "first", "second", "third", and the like in the specification, claims, and accompanying drawings of this application are used to distinguish between different objects, but are not used to limit a specific sequence.

In embodiments of this application, words such as "example" or "for example" are used to represent giving an example, an illustration, or a description. Any embodiment or design solution described as "example" or "for example" in embodiments of this application should not be construed as being more preferred or advantageous than other embodiments or design solutions. Specifically, the words such as "example" or "for example" are used to present related concepts in a specific manner.

For ease of understanding, related technical principles in embodiments of this application are described herein in embodiments of this application.

N-metal-oxide-semiconductor (N-Metal-Oxide-Semiconductor, NMOS transistor): a voltage between a gate and a source of the NMOS transistor (referred to as a gate-source voltage $V_{GS}$). A value of the gate-source voltage $V_{GS}$ is a value of a gate voltage minus a source voltage. When the value of the gate-source voltage $V_{GS}$ is a positive number, and the value is larger, on resistance of a channel is smaller, and a value of a current is larger. When the value of the gate-source voltage $V_{GS}$ is greater than a threshold voltage of the NMOS transistor, the NMOS transistor is turned on (in other words, the NMOS transistor is opened). When the value of the gate-source voltage $V_{GS}$ is less than or equal to the threshold voltage, the NMOS transistor is cut off (in other words, the NMOS transistor is turned off).

A gate driver is configured to: adjust a drive voltage based on a reference voltage, and output the drive voltage to the gate of the NMOS transistor. The drive voltage is used to drive the NMOS transistor to be turned on, or control the NMOS transistor to be turned off. The reference voltage is a basis reference when the gate driver adjusts the drive voltage. The gate driver adjusts the drive voltage by using the reference voltage as a reference, to control the NMOS transistor to be turned on or turned off. For example, the reference voltage may be the source voltage of the NMOS transistor, or may be a voltage that has an association relationship with a value of the source voltage, for example, may be a divided voltage of the source voltage of the NMOS transistor, provided that a value of the reference voltage has an association relationship with the value of the source voltage of the NMOS transistor. Because the reference voltage is the source voltage of the NMOS transistor or a voltage that has an association relationship with the source voltage of the NMOS transistor, adjusting the drive voltage by using the reference voltage as a reference can enable the value of the gate-source voltage of the NMOS transistor to be greater than the threshold voltage and the NMOS transistor to be turned on. The gate driver may further adjust the drive voltage by using the reference voltage as a reference, so that the value of the gate-source voltage of the NMOS transistor is less than or equal to the threshold voltage, and the NMOS transistor is turned off.

For clarity and brevity of descriptions of the following embodiments, a bidirectional charging solution is first briefly described.

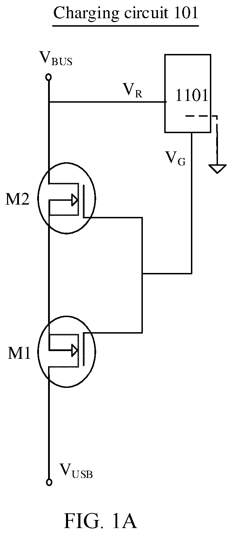

FIG. 1A is a diagram of a structure of a charging circuit 101 in an electronic device such as a tablet computer or a mobile phone. The charging circuit 101 includes a first Si MOS transistor M1, a second Si MOS transistor M2, and a gate driver 1101.

M1 and M2 have a common source and are connected in series, in other words, sources of M1 and M2 are connected, and M1 and M2 are connected in series. Both a gate of M1 and a gate of M2 are connected to the gate driver 1101, and the gate driver 1101 outputs a drive voltage $V_G$ to a common terminal between the gate of M1 and the gate of M2. The gate driver 1101 is connected to a drain of M2. The gate driver 1101 is grounded internally. Both M1 and M2 are NMOS transistors. A drain of M1 is connected to the outside of the electronic device, and is configured to receive or output an external voltage $V_{USB}$. The drain of M2 is connected to the inside of the electronic device, and is configured to receive or output an internal voltage $V_{BUS}$.

The internal voltage $V_{BUS}$ is a voltage of an internal node of the electronic device. The internal node of the electronic device is connected to an internal component of the electronic device. The internal component may be a power component, for example, a battery, or may be a component that needs to be powered, for example, a display screen or a speaker. The external voltage $V_{USB}$ is a voltage of an external node of the electronic device. The external node is connected to an external device. The external device may be a power supply device, for example, a power supply, or may be a component that needs to be powered, for example, a power bank or an external keyboard.

Forward charging may mean that an external power supply charges the electronic device. During forward charging, the external power supply provides the external voltage $V_{USB}$ for the electronic device, and in this case, a drain voltage of M1 is $V_{USB}$. A source of M2 is connected to the drain of M1, and therefore a source voltage of M2 is also $V_{USB}$. A drain voltage of M2 is the internal voltage $V_{BUS}$. In FIG. 1A, a value of the source voltage of M2 is equal to a value of the drain voltage of M2. Therefore, the gate driver 1101 may use the drain voltage $V_{BUS}$ of M2 as a reference voltage $V_R$, and adjust a voltage value of the drive voltage $V_G$ based on a value of the reference voltage $V_R$, to control M2 and M1 to be turned on. When a branch on which M1 and M2 are located is turned on, the drain of M2 outputs the internal voltage $V_{BUS}$, to supply power to a battery or another component in the electronic device.

For example, the gate driver 1101 may apply a gate-source voltage of 5 V to each of M1 and M2, to control M1 and M2 to work in an on state. Because 5 V is greater than threshold voltages of M1 and M2, M1 and M2 can be controlled to be always in a forward opened state (namely, the on state). Specifically, the gate driver 1101 adjusts, based on the value of the reference voltage $V_R$, the value of the drive voltage to a value obtained after 5 V is added to the reference voltage $V_R$, so that gate-source voltages of both M1 and M2 remain at 5 V, and both M1 and M2 are opened forward. For example, when the reference voltage $V_R$ is 20 V, the gate driver 1101 adjusts the drive voltage $V_G$ to 25 V.

Reverse charging may mean that the electronic device charges an external device. During reverse charging, an internal power supply of the electronic device provides the internal voltage $V_{BUS}$, a value of a drain voltage of M2 in the charging circuit 101 is $V_{BUS}$, a reference voltage in FIG. 1A is $V_{BUS}$, and the gate driver 1101 adjusts a voltage value of the drive voltage $V_G$ based on a voltage value of the reference voltage $V_R$, to control M2 and M1 to be turned on. When M1 and M2 are turned on, a branch on which M1 and M2 are located outputs the external voltage $V_{USB}$, to supply power to the external device connected to the electronic device. For a principle and a process of controlling M1 and M2 to be turned on by the gate driver 1101, refer to the foregoing related parts of forward charging and the foregoing descriptions of the working principle of the gate driver. Details are not described herein again.

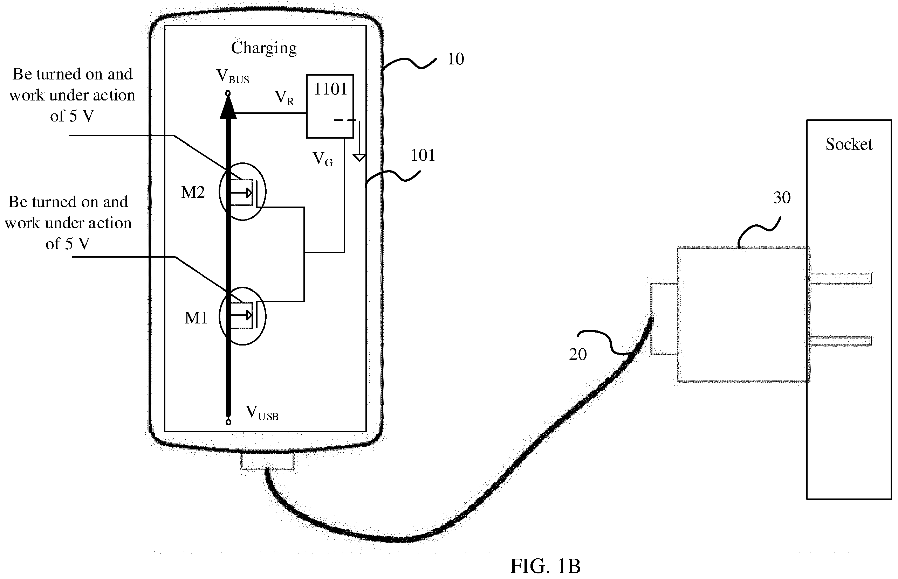

Specifically, for example, in a forward charging scenario shown in FIG. 1B, a charger 30 is connected to an A mobile phone 10 through a universal serial bus (Universal Serial Bus, USB) 20. When the charger 30 is plugged into a socket, and the external power supply provides the external voltage $V_{USB}$ for the A mobile phone 10 by using the USB cable 20, the charging circuit 101 in the mobile phone receives the external voltage $V_{USB}$. When $V_{USB}$=20 V, the gate driver 1101 adjusts the drive voltage $V_G$ to 25 V based on the reference voltage $V_R$ of 20 V, and controls the gate-source voltages of both M1 and M2 to be 5 V by using $V_G$, so that M1 and M2 are always in the on state under action of the gate-source voltages of 5 V. As shown by an arrow in FIG. 1B, a current flows from a node corresponding to $V_{USB}$ to a node corresponding to the internal voltage $V_{BUS}$, in other words, flows from the external power supply of the electronic device to the inside of the electronic device, so that forward charging is implemented, and the A mobile phone 10 displays "charging". It should be noted that M1 and M2 are in the on state when the gate-source voltages are greater than the threshold voltages. The gate-source voltages of both M1 and M2 keep stable at 5 V under control of $V_G$, in other words, M1 and M2 are turned on and work stably under action of the gate-source voltages of 5 V.

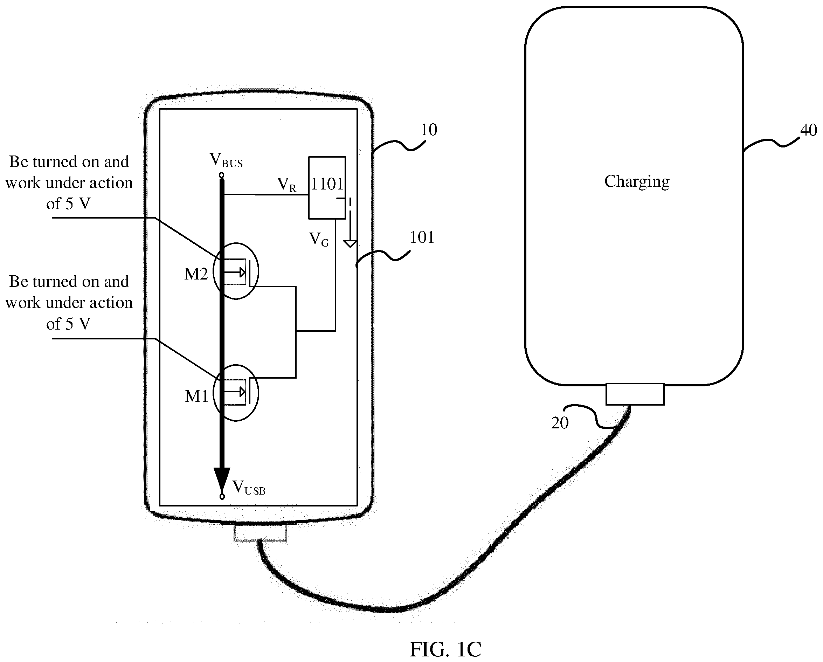

For another example, in a reverse charging scenario shown in FIG. 1C, a B mobile phone 40 is connected to the A mobile phone 10 through the USB cable 20. A power supply inside the charging circuit 101 in the A mobile phone 10 provides the internal voltage $V_{BUS}$. $V_{BUS}$=$V_R$=20 V. Then the gate driver 1101 adjusts the drive voltage $V_G$ to 25 V based on the reference voltage $V_R$, and controls, by using $V_G$, both M1 and M2 to be turned on under action of the gate-source voltages $V_{GS}$ of 5V. As shown by an arrow in FIG. 1C, a current flows from a node corresponding to the internal voltage $V_{BUS}$ to a node corresponding to the external voltage $V_{USB}$. The external voltage $V_{USB}$ is input to the B mobile phone 40 through the USB cable 20, the B mobile phone 40 displays "charging", and reverse charging is implemented. It should be noted that M1 and M2 are in the on state when the gate-source voltages are greater than the threshold voltages. The gate-source voltages of both M1 and M2 keep stable at 5 V under control of $V_G$, in other words, M1 and M2 are turned on and work stably under action of the gate-source voltages of 5 V.

For details of working principles of M1 and M2, refer to the foregoing principle descriptions of the NMOS transistor. Details are not described herein again.

It should be noted that any charging circuit provided in this application is applicable to both a bidirectional charging scenario for wired charging and a bidirectional charging scenario for wireless charging, and this is not limited in this application.

However, in the foregoing bidirectional charging solution, both M1 and M2 that are used are Si MOS transistors, and because on impedance of the Si MOS transistor is relatively large, heat is easily caused, and therefore, the electronic device is hot, safety during charging is relatively low, and efficiency of the charging circuit is also limited. In addition, the Si MOS transistor occupies a relatively large area, which is inconvenient for board layout.

After subsequent research, it is found that a bidirectional gallium nitride high electron mobility transistor (Bidirectional gallium nitride high electron mobility transistor, Bi-GaN HEMT) has advantages of a high withstand voltage, a miniaturized size, low on impedance, low power consumption, and the like. Therefore, it is conceived that one of the Si MOS transistors in the circuit shown in FIG. 1A may be replaced with a Bi-GaN HEMT, and bidirectional charging is implemented by using the Si MOS and the Bi-GaN HEMT, to reduce overall on impedance of the charging circuit and improve efficiency of the charging circuit. In addition, miniaturization of the Bi-GaN HEMT is more convenient for board layout.

However, a drive voltage applicable to the Bi-GaN HEMT is relatively small, and when both the Si MOS transistor and the Bi-GaN HEMT work at a relatively small drive voltage $V_G$ (in other words, at same power), on impedance of the Si MOS transistor is relatively large, which still limits efficiency of the charging circuit.

Therefore, to improve efficiency of a charging circuit, embodiments of this application provide a charging circuit. The charging circuit may be applied to an electronic device, to separately provide, for two switching transistors in the charging circuit, drive voltages adapted to the two switching transistors, to reduce respective on impedance of the two switching transistors, reduce on impedance of the charging circuit, and improve efficiency of the charging circuit.

The charging circuit provided in embodiments of this application may be applied to electronic devices such as a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, and a smartwatch, to implement a bidirectional charging function for the electronic devices.

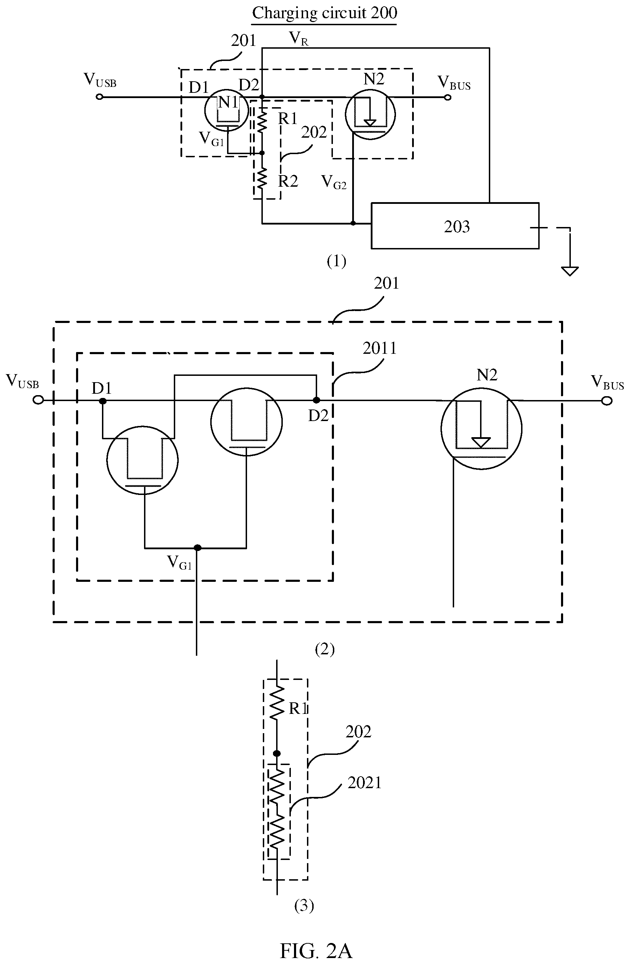

The following describes the charging circuit provided in this application with reference to FIG. 2A to FIG. 3E.

Referring to FIG. 2A(1), an embodiment of this application discloses a charging circuit 200, including a switch circuit 201, a voltage divider circuit 202, and a gate driver 203.

The switch circuit 201 is separately connected to the voltage divider circuit 202 and the gate driver 203. The switch circuit 201 includes a first switching transistor N1 and a second switching transistor N2.

A first terminal D1 of the first switching transistor N1 is connected to an external device (namely, a device other than an electronic device in which the charging circuit 200 is located), and the first terminal D1 of the first switching transistor N1 receives, during forward charging, an external voltage $V_{USB}$ provided by the external device, and provides the external voltage $V_{USB}$ for the external device for charging during reverse charging. A second terminal D2 of the first switching transistor N1 is connected to a first terminal of the second switching transistor N2, and a control terminal of the first switching transistor N1 receives a first drive voltage $V_{G1}$ output by the voltage divider circuit 202. The second terminal D2 of the first switching transistor N1 outputs a reference voltage $V_R$.

The first drive voltage $V_{G1}$ is used to drive the first switching transistor N1 to be turned on or control N1 to be turned off. The reference voltage $V_R$ is a basis reference when the gate driver 203 adjusts a second drive voltage $V_{G2}$. In this embodiment, the reference voltage $V_R$ is a voltage of the first terminal of the second switching transistor N2. When the reference voltage $V_R$ is the voltage of the first terminal of the second switching transistor N2, a difference between the second drive voltage and the reference voltage is equivalent to a value of a gate-source voltage of N2. Therefore, using the reference voltage as a reference to adjust the second drive voltage $V_{G2}$ can control N2 to be turned on or turned off.

A control terminal of the second switching transistor N2 is connected to the gate driver 203, and the control terminal of the second switching transistor N2 receives the second drive voltage $V_{G2}$ output by the gate driver 203. A second terminal of the second switching transistor N2 is connected to the inside of the electronic device. The second terminal of the second switching transistor N2 outputs an internal voltage $V_{BUS}$ to an internal node of the electronic device during forward charging, to supply power to an internal component of the electronic device, and receives, during reverse charging, the internal voltage $V_{BUS}$ provided by an internal power supply of the electronic device.

The second drive voltage $V_{G2}$ is used to drive the second switching transistor N2 to be turned on or control N2 to be turned off. The internal voltage $V_{BUS}$ is a voltage of the internal node of the electronic device. The internal node of the electronic device is connected to the internal component of the electronic device. The internal component may be a power component, for example, a battery, or may be a component that needs to be powered, for example, a display screen or a speaker. The external voltage $V_{USB}$ is a voltage of an external node of the electronic device, and the external node is connected to the external device. The external device may be a power supply device, for example, a power supply, or may be a component that needs to be powered, for example, a power bank or an external keyboard. In this embodiment, the first terminal of the first switching transistor N1 is an external node, and the second terminal of the second switching transistor N2 is an internal node.

It should be noted that the first switching transistor N1 may be understood as a switching transistor, or may be understood as an equivalent switching transistor obtained after a plurality of switching transistors are connected in parallel. Similarly, the second switching transistor N2 may also be understood as a switching transistor, or may be understood as an equivalent switching transistor obtained after a plurality of switching transistors are connected in parallel. That the plurality of switching transistors are connected in parallel means that gates of the plurality of switching transistors are connected, sources of the plurality of switching transistors are connected, and drains of the plurality of switching transistors are connected.

For example, as shown in the switch circuit 201 in FIG. 2A(2), a first switching transistor 2011 may be an equivalent switching transistor obtained after two switching transistors are connected in series. Specifically, first terminals of the two switching transistors are connected, and a common terminal between the first terminals of the two switching transistors is a D1 node, and may be equivalent to a first terminal of the first switching transistor 2011. Second terminals of the two switching transistors are connected, and a common terminal between the second terminals of the two switching transistors is a D2 node, and may be equivalent to a second terminal of the first switching transistor 2011. Control terminals of the two switching transistors are connected, and a common terminal between the second terminals of the two switching transistors may be equivalent to a control terminal of the first switching transistor 2011. The control terminal of the first switching transistor 2011 receives the first drive voltage $V_{G1}$.

It should be further noted that a specific structure in which a plurality of resistors are connected in series and/or in parallel is not limited in this embodiment of this application.

In some embodiments, the first switching transistor N1 is a Bi-GaN HEMT, and due to a characteristic of the Bi-GaN HEMT, each of the first terminal D1 and the second terminal D2 of the first switching transistor N1 can be used as a source or a drain. The control terminal of the first switching transistor N2 may be a gate.

In some embodiments, the second switching transistor N2 is a Si MOS transistor. The first terminal of the second switching transistor N2 may be a source, the second terminal may be a drain, and the control terminal may be a gate.

The voltage divider circuit 202 is separately connected to the switch circuit 201 and the gate driver 203. The voltage divider circuit 202 includes a first resistor R1 and a second resistor R2.

A first terminal of the first resistor R1 receives the reference voltage $V_R$. Therefore, a voltage of the first terminal of the first resistor R1 is the reference voltage $V_R$. A second terminal of the first resistor R1 is connected to a first terminal of the second resistor R2, and a second terminal of the second resistor R2 receives the second drive voltage $V_{G2}$. Therefore, a voltage of the second terminal of the second resistor R2 is the second drive voltage $V_{G2}$. A common terminal between the first resistor R1 and the second resistor R2 outputs the first drive voltage $V_{G1}$. A voltage value of the first drive voltage $V_{G1}$ is a divided voltage value of the voltage difference between the reference voltage $V_R$ and the second drive voltage $V_{G2}$.

Specifically, $$V_{G1} = V_R + \frac{R1}{R1+R2} \times \left(V_{G2} - V_R\right)$$ .

The other terminal of the second resistor R2 is connected to the gate driver 203, and the other terminal of the second resistor R2 receives the second drive voltage $V_{G2}$ output by the gate driver 203.

It should be noted that R1 may be understood as a resistor, or R1 may be understood as an equivalent resistor obtained after a plurality of resistors are connected in series and/or in parallel, and a resistance value of R1 is a resistance value of the equivalent resistor. Similarly, R2 may also be understood as a resistor, or R2 may be understood as an equivalent resistor obtained after a plurality of resistors are connected in series and/or in parallel, and a resistance value of R2 is a resistance value of the equivalent resistor. For example, the second resistor R2 may also be shown in 202 in FIG. 2A(3), to be specific, a second resistor 2021 may be an equivalent resistor obtained after two resistors are connected in series.

It should be further noted that a specific structure in which a plurality of resistors are connected in series and/or in parallel is not limited in this embodiment of this application.

The gate driver 203 is separately connected to the switch circuit 201 and the voltage divider circuit 202. The gate driver 203 is configured to: in a forward charging or reverse charging process, receive the reference voltage $V_R$ output by the switch circuit 201, and adjust a value of the second drive voltage $V_{G2}$ to a first target drive voltage value based on the reference voltage $V_R$, to control the second switching transistor N2 to be turned on. The second drive voltage $V_{G2}$ is a drive voltage used to control N2 to be turned on or turned off. The first target drive voltage value is a value of the second drive voltage that can enable N2 to be in an on state.

For example, the first target drive voltage value may be a sum of the reference voltage $V_R$ and a first drive value. The first drive value is greater than a threshold voltage of the second switching transistor N2. The reference voltage is the voltage of the first terminal of the second switching transistor N2, and the second drive voltage is a voltage of the control terminal of the second switching transistor N2. Therefore, the value of the gate-source voltage of the second switching transistor N2 is the value of the second drive voltage $V_{G2}$ minus a value of the reference voltage $V_R$. Therefore, when the second drive voltage is adjusted to the first target drive voltage value, the value of the gate-source voltage of the second switching transistor N2 is equal to the first drive value. Because the first drive value is greater than the threshold voltage of the second switching transistor N2, N2 is in the on state.

For example, the first target drive voltage value may alternatively be a sum of N times of the reference voltage and the threshold voltage, where N is a positive integer greater than 1. There are many manners of selecting a value for the first target drive voltage value, including but not limited to the content in this embodiment of this application.

In some other embodiments, the gate driver 203 is further configured to: in a process of stopping forward charging or reverse charging, receive the reference voltage $V_R$ output by the switch circuit 201, and adjust the value of the second drive voltage $V_{G2}$ to a second target drive voltage value based on the reference voltage $V_R$, to control the second switching transistor N2 to be turned off. The second target drive voltage value is a value of the second drive voltage that can enable N2 to be in an off state.

For example, the second target drive voltage value may be a value of the reference voltage $V_R$. The reference voltage is the voltage of the first terminal of the second switching transistor N2, and the second drive voltage is a voltage of the control terminal of the second switching transistor N2.

Therefore, the value of the gate-source voltage of the second switching transistor N2 is the value of the second drive voltage $V_{G2}$ minus the value of the reference voltage $V_R$. Therefore, when the second drive voltage is adjusted to the second target drive voltage value, the value of the gate-source voltage of the second switching transistor N2 is equal to zero, and is less than the threshold voltage of the second switching transistor N2. Therefore, N2 is in the off state.

For example, the second target drive voltage value may alternatively be a negative value, and in this case, the value of the gate-source voltage of the second switching transistor N2 can also be less than the threshold voltage of the second switching transistor N2, so that N2 is turned off. There are many manners of selecting a value for the second target drive voltage value, including but not limited to the content in this embodiment of this application.

It should be noted that the gate driver 203 is mainly used to adjust the second drive voltage by using the reference voltage as a reference and output the second drive voltage, to control the second switching transistor to be turned on or turned off, and a specific structure inside the gate driver 203 is not limited in this embodiment of this application. For a specific working principle of the gate driver 203, refer to the foregoing descriptions of the related technical principle of the gate driver. Details are not described herein again.

The following describes specific working processes of the charging circuit 200.

Working process of the charging circuit 200 in a forward charging time period:

Continuing to refer to FIG. 2A(1), in a forward charging scenario of the charging circuit 200, the gate driver 203 in the charging circuit 200 is configured to: receive the reference voltage $V_R$, and adjust the value of the second drive voltage $V_{G2}$ to the first target drive voltage value based on the reference voltage $V_R$, to control the second switching transistor N2 to be turned on.

For a specific principle of enabling, when the value of the second drive voltage $V_{G2}$ output by the gate driver 203 is adjusted to the first target drive voltage value, the second switching transistor N2 in the switch circuit 201 to be turned on, refer to the foregoing related descriptions of the gate driver 203. Details are not described herein again.

For example, the first target drive voltage value may be set to the sum of the reference voltage $V_R$ and the first drive value. For details of a manner of selecting a value for the first target drive voltage value, refer to the foregoing related descriptions of the first target drive voltage value in the gate driver 203. Details are not described herein again. In some embodiments, if the second switching transistor N2 is a Si MOS transistor, because on impedance is smaller when a gate-source voltage of the Si MOS transistor is larger, to improve efficiency of the charging circuit 200 and reduce on impedance of the circuit, a relatively large first drive value may be selected, so that the second switching transistor N2 is turned on under action of a relatively large gate-source voltage, thereby reducing the on impedance of N2. For example, the first drive value may be set to 9 V.

For example, when the first drive value is 9 V, and the external voltage $V_{USB}$ is 20 V, a process of turning on N2 is as follows: At an initial moment of the forward charging scenario, N2 is not turned on. In this case, the reference voltage $V_R$ is 0, and the gate driver 203 adjusts the second drive voltage $V_{G2}$ to 9 V based on the reference voltage $V_R$, so that the second switching transistor N2 is turned on under action of a gate-source voltage of 9 V. After the second switching transistor N2 is turned on, the reference voltage $V_R$ changes to 20 V, and the second drive voltage $V_{G2}$ increases to 20+9=29 V accordingly, to continue to control the second switching transistor N2 to be turned on and work under action of the gate-source voltage of 9 V. In other words, $V_{G2}$ is adjusted to increase accordingly as $V_R$ increases, so that N2 remains turned on and working under action of the gate-source voltage of 9 V.

The gate driver 203 outputs the second drive voltage $V_{G2}$ to the control terminal of the second switching transistor N2 in the switch circuit 201, so that N2 in the switch circuit 201 is turned on under control of the second drive voltage $V_{G2}$.

The gate driver 203 further outputs the second drive voltage $V_{G2}$ to the second terminal of the second resistor R2 in the voltage divider circuit 202. The first terminal of the first resistor in the voltage divider circuit 202 receives the reference voltage $V_R$, and the second terminal of the second resistor R2 receives the second drive voltage $V_{G2}$. Therefore, the voltage of the first terminal of the first resistor is $V_R$, and the second terminal of the second resistor R2 is $V_{G2}$. A voltage between the voltages of the second terminal of the second resistor R2 and the first terminal of the first resistor R1 is divided by using R1 and R2, to obtain the first drive voltage $V_{G1}$. The first drive voltage $V_{G1}$ is a divided voltage between the reference voltage $V_R$ and the second drive voltage $V_{G2}$, and the value of the first drive voltage $V_{G1}$ is

$$V_{G1} = V_R + \frac{R1}{R1+R2} \times \left(V_{G2} - V_R\right)$$ . The first drive voltage $V_{G1}$ can control the first switching transistor N1 of the switch circuit 201 to be turned on or turned off.

Specifically, in a forward charging state of the first switching transistor N1, a value of a gate-source voltage V1 of N1 is equal to the first drive voltage $V_{G1}$ minus the reference voltage $V_R$. It can be learned from the foregoing descriptions of the voltage divider circuit 202 that the value of the first drive voltage $V_{G1}$ is $V_{G1} = V_R + \frac{R1}{R1+R2} \times \left(V_{G2} - V_R\right)$,

and therefore a gate-source voltage of N1 is $V1 = V_{G1} - V_R = \frac{R1}{R1+R2} \times \left(V_{G2} - V_R\right)$. Therefore, when the value of the second drive voltage $V_{G2}$ is adjusted to the sum of the first drive value and the reference voltage $V_R$, the value of the gate-source voltage of N1 is determined by the first drive value, the first resistor R1, and the second resistor R2. Because the first drive value is a fixed value, proper values of the first resistor R1 and the second resistor R2 may be selected, or a ratio of the first resistor R1 to the second resistor R2 may be adjusted, so that the gate-source voltage V1 of the first switching transistor N1 can be greater than a threshold voltage of N1, to drive N1 to be turned on. The values of the first resistor R1 and the second resistor R2 may be set based on an actual scenario requirement, a specific test situation, and the like.

In the forward charging scenario, if the first target drive voltage value is set to the sum of the reference voltage $V_R$ and the first drive value, a process in which the first drive voltage $V_{G1}$ controls the first switching transistor N1 of the switch circuit 201 to be turned on is as follows: At the initial moment of forward charging, an external power supply provides the external voltage $V_{USB}$ for the charging circuit 200, a voltage of the first terminal D1 of N1 is the external voltage $V_{USB}$, and N1 is initially in the off state. In this case, the second terminal D2 of N1 is a source of N1, and a voltage of the second terminal of N1 is the reference voltage $V_R$. At the initial moment, because N1 is in the off state, a voltage of the second terminal D2 of N1 is 0 V. In this case, the voltage divider circuit 202 provides the first drive voltage for the control terminal of N1. Therefore, a calculation formula for the gate-source voltage of N1 is

$$V1 = V_{G1} - V_R = \frac{R1}{R1+R2} \times (V_{G2} - V_R)$$

. The difference between the second drive voltage $V_{G2}$ and the reference voltage $V_R$ is the first drive value, and is a fixed value. Therefore, the value of V1 is determined by R1 and R2. When proper R1 and R2 are selected, the value of the gate-source voltage V1 of N1 can be greater than the threshold voltage of N1, so that N1 is turned on. After N1 is turned on, N1 may be equivalent to a conducting wire. Therefore, it may be considered that the value of the reference voltage $V_R$ is equivalent to the external voltage $V_{USB}$. Correspondingly, the second drive voltage is adjusted to increase by using the value of the reference voltage $V_R$ as a reference, so that the difference between the second drive voltage $V_{G2}$ and the reference voltage $V_R$ is still the first drive value. Because the difference between the second drive voltage $V_{G2}$ and the reference voltage $V_R$ remains unchanged, and the resistance values of the first resistor and the second resistor are also fixed, it can be learned from the foregoing calculation formula for V1 that V1 also remains unchanged, and is still greater than the threshold voltage, so that N1 continues to be turned on.

For example, when the first switching transistor N1 is a Bi-GaN HEMT, on impedance is relatively small at a relatively low gate-source voltage. For example, at a gate-source voltage of 5 V, the Bi-GaN HEMT is in the on state, and on impedance is relatively small. Therefore, when the first switching transistor N1 is a Bi-GaN HEMT, it can be learned from the foregoing descriptions of the calculation formula for V1 that proper R1 and R2 may be selected, so that the first switching transistor N1 works at the gate-source voltage of 5 V. For example, when the difference (namely, the first drive value) between the second drive voltage $V_{G2}$ and the reference voltage $V_R$ is 9 V, the ratio of the resistance values of R1 and R2 is adjusted to 5:4, and V1 may be calculated as 5 V based on the foregoing calculation formula for the gate-source voltage V1 of N1, and therefore the first switching transistor N1 is turned on and works at the gate-source voltage of 5 V.

In the forward charging scenario, the first terminal D1 of N1 of the switch circuit 201 receives the external voltage $V_{USB}$, the control terminal of N1 receives the first drive voltage $V_{G1}$, the control terminal of N2 receives the second drive voltage $V_{G2}$, and the reference voltage $V_R$ is output to the gate driver 203 at the first terminal of N2. The first switching transistor N1 is turned on under control of the first drive voltage $V_{G1}$, and the second switching transistor N2 is turned on under control of the second drive voltage $V_{G2}$. When the first switching transistor N1 and the second switching transistor N2 are turned on, the switch circuit 201 outputs the internal voltage $V_{BUS}$ from the second terminal of the second switching transistor N2 based on the received external voltage $V_{USB}$ by using N1 and N2 that are turned on. In other words, a current inside the charging circuit 200 flows from the external voltage $V_{USB}$ to the internal voltage $V_{BUS}$.

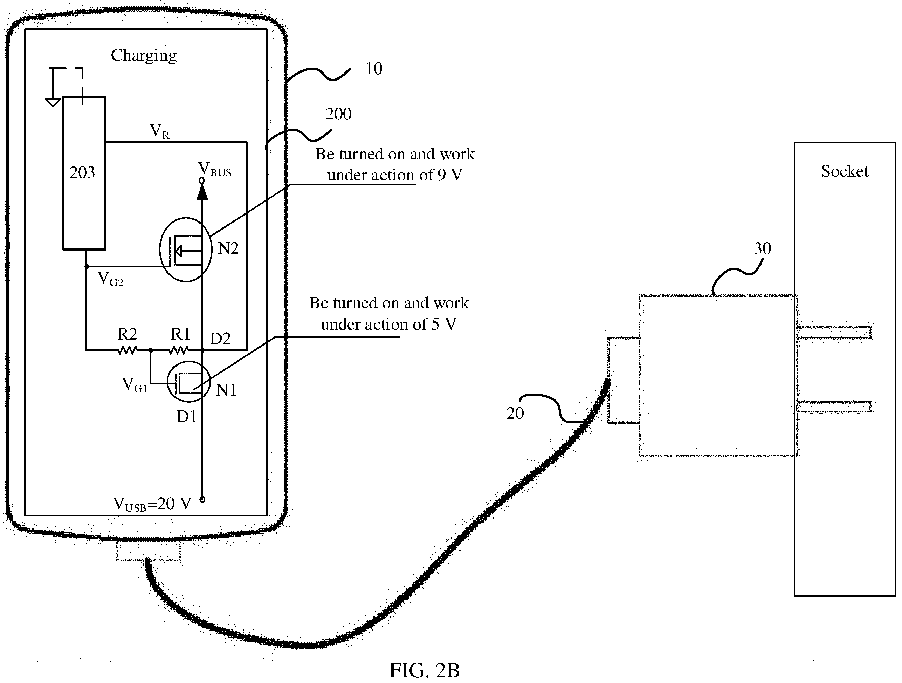

Specifically, referring to a scenario shown in FIG. 2B, the charging circuit 200 is applied to an A mobile phone 10. When the external voltage $V_{UBS}$ is 20 V, the ratio of the first resistor R1 to the second resistor R2 is 5:4, the first switching transistor N1 is a Bi-GaN HEMT, and the second switching transistor N2 is a Si MOS transistor, the charging circuit 200 can control the first switching transistor N1 to be turned on under action of a gate-source voltage of 5 V, and control the second switching transistor N2 to be turned on under action of a gate-source voltage of 9 V.

Specifically, when N1 and N2 are stable in the on state, as shown by an arrow in FIG. 2B, the external device provides the external voltage $V_{USB}$ for the charging circuit 200, and the internal voltage $V_{BUS}$ is output by using N1 and N2 that are turned on. On a branch on which the arrow is located, the external voltage $V_{USB}$, the reference voltage $V_R$, and the internal voltage $V_{BUS}$ are all 20 V. To keep N1 and N2 turned on, the gate driver 203 adjusts, for output, the second drive voltage $V_{G2}$ to 29 V based on the reference voltage $V_R$. In this case, the gate-source voltage of N2 is the second drive voltage $V_{G2}$ minus the value of the reference voltage $V_R$, and is equal to 9 V, and N2 is turned on and works under action of 9 V. In this case, because $V_{G2}$ is 29 V, $V_R$ is 20 V, and the ratio of the first resistor R1 to the second resistor R2 is 5:4, the first drive voltage $V_{G1}$ is calculated as 25 V by using the calculation formula

$$V_{G1} = V_R + \frac{R1}{R1+R2} \times (V_{G2} - V_R)$$

for the first drive voltage $V_{G1}$. Therefore, the gate-source voltage of the first switching transistor N1 is a value of the first drive voltage $V_{G1}$ minus the reference voltage $V_R$, and is equal to 5 V. N1 is turned on and works under action of 5 V. When N1 and N2 are turned on, the charging circuit 200 may provide the internal voltage $V_{BUS}$ for the internal component of the electronic device, to charge the internal component of the electronic device, and the A mobile phone 10 is in a charging state. It should be noted that N1 and N2 are in the on state when the gate-source voltages are greater than the threshold voltages. In the scenario shown in FIG. 2B, under control of $V_G$, the gate-source voltage of N1 is stable at 5 V, and the gate-source voltage of N2 is stable at 9 V, in other words, N1 is turned on and works stably under action of the gate-source voltage of 5 V, and N2 is turned on and works stably under action of the gate-source voltage of 9 V.

It can be learned from the foregoing descriptions that in the charging circuit 200, the first drive voltage $V_{G1}$ controls the first switching transistor N1 to be turned on, and the second drive voltage $V_{G2}$ controls the second switching transistor N2 to be turned on. Voltage values of the first drive voltage for controlling the first switching transistor N1 to be turned on and the second drive voltage for controlling the second switching transistor N2 to be turned on may be different. Further, values of the gate-source voltage for driving the first switching transistor N1 to be turned on and the gate-source voltage for driving the second switching transistor N2 to be turned on may also be different. In an actual application, based on respective characteristics of the first switching transistor N1 and the second switching transistor N2, a first drive voltage $V_{G1}$ that can enable the first switching transistor N1 to have smaller on impedance and lower power consumption may be selected, to control the first switching transistor N1 to be turned on, and similarly, a second drive voltage $V_{G2}$ that can enable the second switching transistor N2 to have smaller on impedance and lower power consumption may be selected, to control the second switching transistor N2 to be turned on. Because both the first switching transistor N1 and the second switching transistor N2 are turned on under action of drive voltages adapted to the first switching transistor N1 and the second switching transistor N2, on impedance of the charging circuit is reduced, and forward charging efficiency of the charging circuit is improved.

(2) Working process of the charging circuit 200 in a forward turn-off time period:

When the electronic device to which the charging circuit 200 is applied is fully charged or the electronic device receives a charging stop instruction or the like, the charging circuit 200 needs to stop performing forward charging (in other words, perform forward turn-off). Specifically, referring to FIG. 2A(1), in a forward turn-off scenario, the gate driver 203 in the charging circuit 200 receives the reference voltage $V_R$ output by the switch circuit 201, and adjusts the value of the second drive voltage $V_{G2}$ to the second target drive voltage value based on the reference voltage $V_R$, to control the second switching transistor N2 to be turned off.

For a specific principle of enabling, when the value of the second drive voltage $V_{G2}$ is adjusted to the second target drive voltage value, the second switching transistor N2 in the switch circuit 201 to be turned off, refer to the foregoing related descriptions of the gate driver 203. Details are not described herein again.

For example, the second target drive voltage value may be a value equal to the reference voltage $V_R$. For a manner of selecting a value for the second target drive voltage value, refer to the foregoing related descriptions of the first target drive voltage value in the gate driver 203. Details are not described herein again.

For example, when the external voltage $V_{USB}$ is 20 V, a process of turning off N2 is as follows: At an initial moment of the forward turn-off time period, N2 is still in the on state. In this case, the reference voltage $V_R$ is 20 V, and the gate driver 203 adjusts the second drive regulated voltage to a value equal to the reference voltage $V_R$, and outputs the second drive voltage $V_{G2}$ of 20 V, so that the gate-source voltage of the second switching transistor N2 is 0, and N2 is turned off. After N2 is turned off, the reference voltage $V_R$ changes to 0 V, and the second drive voltage $V_{G2}$ output by the gate driver 203 is adjusted to 0 V accordingly. As $V_R$ decreases, $V_{G2}$ decreases accordingly. $V_{G2}$ is always equal to the value of $V_R$, so that the gate-source voltage of N2 is always kept at 0, and the gate-source voltage of N2 is always less than the threshold voltage, and therefore N2 is always in the off state.

The gate driver 203 outputs the second drive voltage $V_{G2}$ to the control terminal of N2 in the switch circuit 201, so that after receiving the second drive voltage $V_{G2}$, the switch circuit 201 controls, under control of the second drive voltage $V_{G2}$, the second switching transistor N2 to be turned off. The gate driver 203 further outputs the second drive voltage $V_{G2}$ to the second terminal of the second resistor R2 in the voltage divider circuit 202. The first terminal of the first resistor in the voltage divider circuit 202 receives the reference voltage $V_R$, and the second terminal of the second resistor R2 receives the second drive voltage $V_{G2}$. Therefore, the voltage of the first terminal of the first resistor is $V_R$, and the voltage of the second terminal of the second resistor R2 is $V_{G2}$. A voltage between the voltages of the second terminal of the second resistor R2 and the first terminal of the first resistor R1 is divided by using R1 and R2, to obtain the first drive voltage $V_{G1}$. Because the first drive voltage $V_{G1}$ is a divided voltage between the reference voltage $V_R$ and the second drive voltage $V_{G2}$,

a calculation formula for the first drive voltage $V_{G1}$ is $$V_{G1} = V_R + \frac{R1}{R1 + R2} \times \left( V_{G2} - V_R \right)$$ . For a working process and a principle of the voltage divider circuit 202 in the forward turn-off time period, refer to the foregoing related content of the voltage divider circuit 202 in the forward charging time period. Details are not described herein again.

In the forward turn-off scenario, if the second drive voltage $V_{G2}$ is set to be equal to the reference voltage $V_R$, a process in which the first drive voltage $V_{G1}$ controls the first switching transistor N1 of the switch circuit 201 to be turned off is as follows: In the forward turn-off time period, a voltage of the control terminal of N1 is the first drive voltage, the second terminal D2 of N1 is a source of N1, a voltage of the second terminal of N1 is the reference voltage $V_R$, and a voltage between the control terminal and the second terminal D2 of N1 is a gate-source voltage V1 of N1. A calculation formula for the gate-source voltage V1 of N1 is 
$$V1 = V_{G1} - V_R = \frac{R1}{R1 + R2} \times \left(V_{G2} - V_R\right)$$
. It can be learned from the foregoing descriptions of the process of turning off the second switching transistor N2 that the second target drive voltage value is set to be equal to the reference voltage $V_R$. Therefore, the gate-source voltage V1 of N1 is calculated as 0 by using the calculation formula for the gate-source voltage V1 of N1, and N1 is in the off state. Because both N1 and N2 are turned off, the reference voltage $V_R$ falls to 0 V, and the second drive voltage $V_{G2}$ changes to 0 V accordingly. It can be learned from the calculation formula for the first drive voltage that the first drive voltage is also 0 V, and therefore N1 and N2 continue to remain in the off state.

Therefore, when the second drive voltage $V_{G2}$ controls N2 to be turned off, the first drive voltage $V_{G1}$ also controls N1 to be turned off.

In the forward turn-off scenario, the first terminal D1 of N1 of the switch circuit 201 receives the external voltage $V_{USB}$, the control terminal of N1 receives the first drive voltage $V_{G1}$, the control terminal of N2 receives the second drive voltage $V_{G2}$, and the reference voltage $V_R$ is output to the gate driver 203 at the first terminal of N2. The first switching transistor N1 is turned off under control of the first drive voltage $V_{G1}$, and the second switching transistor N2 is turned off under control of the second drive voltage $V_{G2}$. When the first switching transistor N1 and the second switching transistor N2 are turned off, the external voltage $V_{USB}$ cannot pass through N1 and N2 that are turned off to output a current, and therefore output of the internal voltage $V_{BUS}$ is stopped. In other words, the current inside the charging circuit 200 no longer flows from the external voltage $V_{USB}$ to the internal voltage $V_{BUS}$.

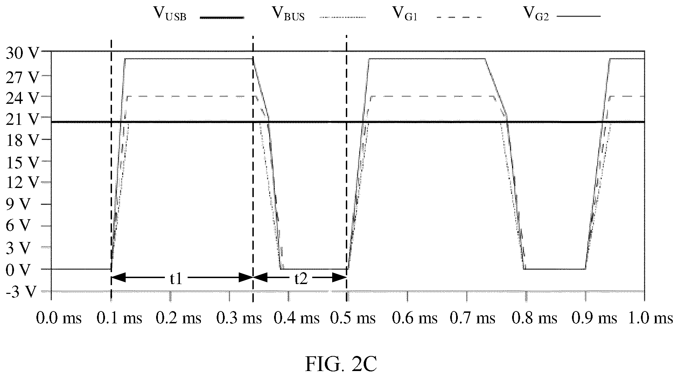

For example, in a scenario shown in FIG. 2B, the charging circuit 200 repeatedly performs a process of performing forward charging and then performing forward turn-off. A voltage change in the charging circuit 200 is shown in FIG. 2C. Specifically, referring to FIG. 2C, taking a forward charging phase t1 as an example, when the external voltage $V_{USB}$ is 20 V, the gate driver 203 adjusts the second drive voltage $V_{G2}$ to 29 V based on the reference voltage $V_R$ of 20 V. The first drive voltage $V_{G1}$ is a divided voltage between the second drive voltage $V_{G2}$ and the reference voltage $V_R$, and is 25 V. In this case, the gate-source voltage of N1 is 5 V, the gate-source voltage of N2 is 9 V, and both N1 and N2 are in the on state. Further, after receiving the external voltage $V_{USB}$, the charging circuit 200 can output the internal voltage $V_{BUS}$ of 20 V by using N1 and N2 that are turned on. Taking a forward turn-off phase t2 as an example, the external voltage $V_{USB}$ is still 20 V, and in an initial phase of t2, N1 and N2 are not turned off, and the reference voltage is 20 V. In a scenario in which forward charging is stopped, the gate driver 203 adjusts the second drive voltage $V_{G2}$ to be equal to the value of the reference voltage, so that N2 is turned off. After N2 is turned off, it can be learned from the foregoing calculation formula for the gate-source voltage of N1 that the gate-source voltage of N1 changes to 0 V, and N1 is turned off. Because N1 and N2 are turned off, the reference voltage $V_R$ falls to 0 V, and the gate driver 203 correspondingly adjusts the second drive voltage $V_{G2}$ to 0 V, to continue to keep N2 turned off. The first drive voltage $V_{G1}$ is a divided voltage between the second drive voltage $V_{G2}$ and the reference voltage $V_R$. Because both the second drive voltage and the reference voltage are 0 V, the first drive voltage $V_{G1}$ is also 0 V, and N1 also continues to be in the off state. Because N1 and N2 are turned off, the current inside the charging circuit 200 no longer flows from the external voltage $V_{USB}$ to the internal voltage $V_{BUS}$, and the internal voltage $V_{BUS}$ is 0.

(3) Working process of the charging circuit 200 in a reverse charging time period:

Continuing to refer to FIG. 2A(1), in a reverse charging scenario of the charging circuit 200, the gate driver 203 in the charging circuit 200 is configured to: receive the reference voltage $V_R$, and adjust the value of the second drive voltage $V_{G2}$ to the first target drive voltage value based on the reference voltage $V_R$, to control the second switching transistor N2 to be turned on.

For a process and a principle of adjusting the second drive voltage $V_{G2}$ by the gate driver 203 in the reverse charging time period, refer to the process and the principle of adjusting the second drive voltage $V_{G2}$ by the gate driver 203 in the forward charging time period. Details are not described herein again.

In the reverse charging scenario, after receiving the second drive voltage $V_{G2}$ and the reference voltage $V_R$, the voltage divider circuit 202 divides the voltage between the second drive voltage $V_{G2}$ and the reference voltage $V_R$ by using R1 and R2, to obtain the first drive voltage $V_{G1}$.

For a working process and a principle of the voltage divider circuit 202 in the reverse charging scenario, refer to the related descriptions of the voltage divider circuit 202 in the forward charging scenario. Details are not described herein again.

In the reverse charging scenario, the switch circuit 201 receives the internal voltage $V_{BUS}$ by using the second terminal of the second switching transistor N2, receives the first drive voltage $V_{G1}$ by using the control terminal of the first switching transistor N1, receives the second drive voltage $V_{G2}$ by using the control terminal of the second switching transistor N2, and outputs the reference voltage $V_R$ to the gate driver 203 by using the first terminal of N2. The first switching transistor N1 is turned on under control of the first drive voltage $V_{G1}$, and the second switching transistor N2 is turned on under control of the second drive voltage $V_{G2}$. When the first switching transistor N1 and the second switching transistor N2 are turned on, the switch circuit 201 receives the internal voltage $V_{BUS}$ by using the second terminal of the second switching transistor N2, and outputs the external voltage $V_{USB}$ from the first terminal D1 of N1 by using N1 and N2 that are turned on. In other words, a current inside the charging circuit 200 flows from the internal voltage $V_{BUS}$ to the external voltage $V_{USB}$.

For a process in which the second drive voltage $V_{G2}$ controls the second switching transistor N2 to be turned on in the reverse charging time period, refer to the foregoing process in which the second drive voltage $V_{G2}$ controls the second switching transistor N2 to be turned on in the forward charging time period. Details are not described herein again.

In the reverse charging time period, a process in which the first drive voltage $V_{G1}$ controls the first switching transistor N1 of the switch circuit 201 to be turned on is as follows: At an initial moment of reverse charging, N1 is in the off state, and the reference voltage $V_R$ is 0 V. In this case, the first terminal D1 of N1 is used as a source of N1, and is also 0 V, and no external voltage is output. In this case, the voltage divider circuit 202 provides the first drive voltage

$$V_{G1} = V_R + \frac{R1}{R1+R2} \times (V_{G2} - V_R)$$ for the control terminal of N1. Because the difference between the second drive voltage $V_{G2}$ and the reference voltage $V_R$ is the first drive value, and is a fixed value, and neither of R1 and R2 is 0, in this case, the first drive voltage $V_{G1}$ is not 0, and is greater than a threshold voltage of N1. In this case, a value of a gate-source voltage of N1 is equal to the value of the first drive voltage $V_{G1}$, and therefore N1 is turned on. After N1 is turned on, a voltage value of the first terminal D1 of N1, a voltage value (namely, the reference voltage $V_R$) of the second terminal D2 of N1, and a value of the internal voltage $V_{BUS}$ are all equal. Therefore, it may also be considered that the value of the gate-source voltage of N1 is the difference, namely, $$V1 = \frac{R1}{R1+R2} \times (V_{G2} - V_R)$$, between the second drive voltage and the reference voltage. Because the difference between the second drive voltage $V_{G2}$ and the reference voltage $V_R$ is the first drive value, and is a fixed value, and a ratio of selected R1 to selected R2 can enable V1 to be greater than the threshold voltage, N1 can remain turned on.

For a working process and a principle of the charging circuit 200 in the reverse charging time period, refer to the foregoing working process and principle of the charging circuit 200 in the forward charging time period. However, the reverse charging time period differs from the forward charging time period in that a current direction of the charging circuit 200 in the reverse charging time period is opposite to that in the forward charging time period, and is from the internal voltage $V_{BUS}$ to the external voltage $V_{USB}$.

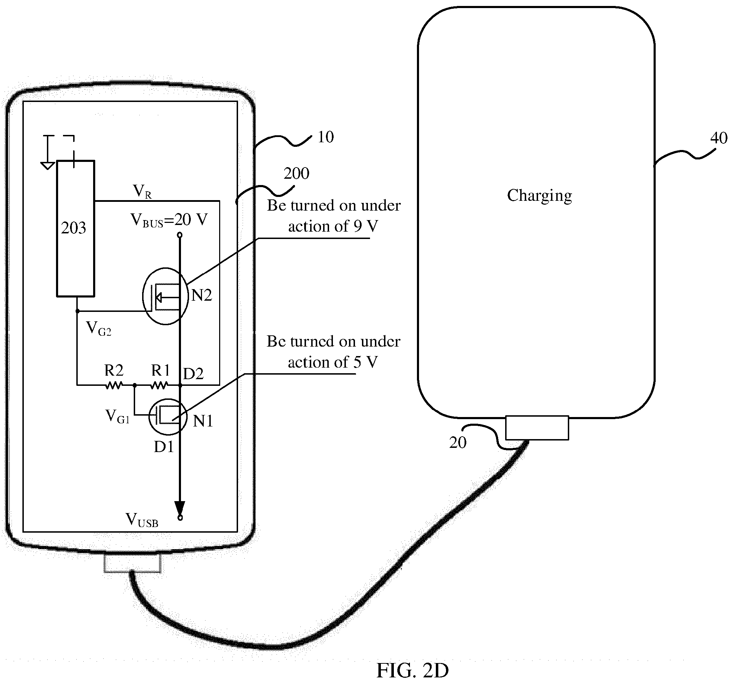

For example, referring to a scenario shown in FIG. 2D, the charging circuit 200 is applied to an A mobile phone 10. When the internal voltage $V_{BUS}$ is 20 V, the ratio of the first resistor R1 to the second resistor R2 is 5:4, the first switching transistor N1 is a Bi-GaN HEMT, and the second switching transistor N2 is a Si MOS transistor, the charging circuit 200 can control the first switching transistor N1 to be turned on under action of a gate-source voltage of 5 V, and control the second switching transistor N2 to be turned on under action of a gate-source voltage of 9 V. It should be noted that N1 and N2 are in the on state when the gate-source voltages are greater than the threshold voltages. In the scenario shown in FIG. 2D, the gate-source voltage V1 of N1 is stable at 5 V under control of the first drive voltage $V_{G1}$, and the gate-source voltage of N2 is stable at 9 V under control of the second drive voltage $V_{G2}$, in other words, N1 is turned on and works stably under action of the gate-source voltage of 5 V, and N2 is turned on and works stably under action of the gate-source voltage of 9 V.

Specifically, when N1 and N2 are turned on and work stably, as shown by an arrow in FIG. 2D, the electronic device provides the internal voltage $V_{BUS}$ for the charging circuit 200, and outputs the external voltage $V_{USB}$ by using N1 and N2 that are turned on. On a branch on which the arrow is located, the external voltage $V_{USB}$, the reference voltage $V_R$, and the internal voltage $V_{BUS}$ are all 20 V. To keep N1 and N2 turned on, the gate driver 203 adjusts, for output, the second drive voltage $V_{G2}$ to the first target drive voltage value 29 V based on the reference voltage $V_R$. Therefore, the gate-source voltage of N2 is a value of the second drive voltage $V_{G2}$ minus the reference voltage $V_R$, and is equal to 9 V, and N2 is turned on and works under action of 9 V. In this case, because $V_{G2}$ is 29 V, $V_R$ is 20 V, and the ratio of the first resistor R1 to the second resistor R2 is 5:4, $$V_{G1} = V_R + \frac{R1}{R1+R2} \times (V_{G2} - V_R) = 20 + \frac{5}{9} \times (29 - 20) = 25$$ based on the calculation formula for the first drive voltage $V_{G1}$. Therefore, the gate-source voltage of the first switching transistor N1 is a value of the first drive voltage $V_{G1}$ minus the reference voltage $V_R$, and is equal to 5 V. In this case, N1 and N2 are turned on. The current may flow from the internal voltage $V_{BUS}$ to the external voltage $V_{USB}$, and a mobile phone 40 is charged by using the external voltage $V_{USB}$.

It can be learned from the foregoing descriptions that in the charging circuit 200, in the reverse charging time period, the first drive voltage $V_{G1}$ controls the first switching transistor N1 to be turned on, and the second drive voltage $V_{G2}$

controls the second switching transistor N2 to be turned on. Because the voltage for controlling the first switching transistor N1 to be turned on and the voltage for controlling the second switching transistor N2 to be turned on are different, the gate-source voltage for driving the first switching transistor N1 to be turned on and the gate-source voltage for driving the second switching transistor N2 to be turned on are also different. Further, in an actual application, based on respective characteristics of the first switching transistor N1 and the second switching transistor N2, a first drive voltage $V_{G1}$ that can enable the first switching transistor N1 to have smaller on impedance and lower power consumption may be selected, to control the first switching transistor N1 to be turned on, and similarly, a second drive voltage $V_{G2}$ that can enable the second switching transistor N2 to have smaller on impedance and lower power consumption may be selected, to control the second switching transistor N2 to be turned on. Because both the first switching transistor N1 and the second switching transistor N2 are turned on under action of drive voltages adapted to the first switching transistor N1 and the second switching transistor N2, on impedance of the charging circuit is reduced, and reverse charging efficiency of the charging circuit is improved.

Working process of the charging circuit 200 in a reverse turn-off time period:

When the electronic device to which the charging circuit 200 is applied does not need to supply power to an external electronic device or the electronic device receives a power supply stop instruction or the like, the charging circuit 200 needs to stop performing reverse charging (in other words, perform reverse turn-off). Specifically, referring to FIG. 2A(1), in a reverse turn-off scenario, the gate driver 203 in the charging circuit 200 receives the reference voltage $V_R$ output by the switch circuit 201, and adjusts the value of the second drive voltage $V_{G2}$ to the second target drive voltage value based on the reference voltage $V_R$, to control the second switching transistor N2 to be turned off.

For a principle and a process of adjusting the second drive voltage $V_{G2}$ by the gate driver 203 in the reverse turn-off time period, refer to the principle and the process of adjusting the second drive voltage $V_{G2}$ by the gate driver 203 in the forward turn-off time period. Details are not described herein again.

The gate driver 203 outputs the second drive voltage $V_{G2}$ to the control terminal of N2 in the switch circuit 201, so that after receiving the second drive voltage $V_{G2}$, the switch circuit 201 controls, under control of the second drive voltage $V_{G2}$, the second switching transistor N2 to be turned off. The gate driver 203 further outputs the second drive voltage $V_{G2}$ to the second terminal of the second resistor R2 in the voltage divider circuit 202.

In the reverse turn-off time period, the first terminal of the first resistor in the voltage divider circuit 202 receives the reference voltage $V_R$, and the second terminal of the second resistor R2 receives the second drive voltage $V_{G2}$. Therefore, the voltage of the first terminal of the first resistor is $V_R$, and the voltage of the second terminal of the second resistor R2 is $V_{G2}$. A voltage between the voltages of the second terminal of the second resistor R2 and the first terminal of the first resistor R1 is divided by using R1 and R2, to obtain the first drive voltage $V_{G1}$. The first drive voltage $V_{G1}$ is a divided voltage between the reference voltage $V_R$ and the second drive voltage $V_{G2}$.

For a working process and a principle of the voltage divider circuit 202 in the reverse turn-off scenario, refer to the working process and the principle of the voltage divider circuit 202 in the forward turn-off scenario. Details are not described herein again.

In the reverse turn-off time period, if the gate driver 203 adjusts the value of the second drive voltage to be equal to the reference voltage $V_R$, it can be ensured that the gate-source voltage of N2 is 0. Because the gate-source voltage of N2 is less than the threshold voltage, N2 can remain in the off state. After N2 is turned off, the reference voltage $V_R$ falls to 0, and the gate driver 203 correspondingly adjusts the second drive voltage $V_{G2}$ to 0 V. The first drive voltage $V_{G1}$ is a divided voltage between the reference voltage $V_R$ and the second drive voltage $V_{G2}$. Therefore, the first drive voltage also falls to 0 V, and therefore the first switching transistor N1 is also turned off.

In the reverse turn-off scenario, the first terminal D1 of N1 of the switch circuit 201 receives the internal voltage $V_{BUS}$, the control terminal of N1 receives the first drive voltage $V_{G1}$, the control terminal of N2 receives the second drive voltage $V_{G2}$, and the reference voltage $V_R$ is output to the gate driver 203 at the first terminal of N2. The first switching transistor N1 is turned off under control of the first drive voltage $V_{G1}$, and the second switching transistor N2 is turned off under control of the second drive voltage $V_{G2}$. When the first switching transistor N1 and the second switching transistor N2 are turned off, the internal voltage $V_{BUS}$ cannot pass through N1 and N2 that are turned off to output the external voltage $V_{USB}$. In other words, a current inside the charging circuit 200 no longer flows from the internal voltage $V_{BUS}$ to the external voltage $V_{USB}$.

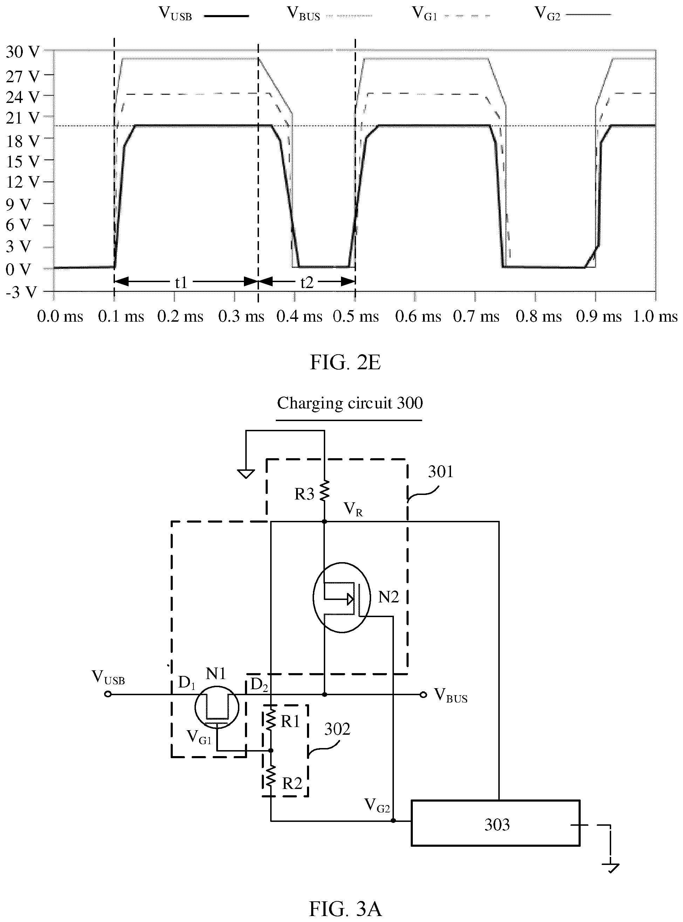

For example, in a scenario shown in FIG. 2D, the charging circuit 200 repeatedly performs a process of performing reverse charging and then performing reverse turn-off. A voltage change in the charging circuit 200 is shown in FIG. 2E. Specifically, referring to FIG. 2E, taking a reverse charging phase t1 as an example, when the internal voltage $V_{BUS}$ is 20 V, the gate driver 203 adjusts the second drive voltage $V_{G2}$ to 29 V based on the reference voltage $V_R$ of 20 V. The first drive voltage $V_{G1}$ is a divided voltage between the reference voltage $V_R$ and the second drive voltage $V_{G2}$, and is 25 V. In this case, a gate-source voltage is 5 V, the gate-source voltage of N2 is 9 V, and both N1 and N2 are in the on state. Further, after receiving the internal voltage $V_{BUS}$, the charging circuit 200 can output the output voltage $V_{USB}$ of 20 V by using N1 and N2 that are turned on. Taking a reverse turn-off phase t2 as an example, in an initial phase of t2, N1 and N2 are not turned off, and the reference voltage is 20 V. In a scenario in which reverse charging is stopped, the gate driver 203

adjusts the second drive voltage $V_{G2}$ to be equal to a value of the reference voltage, so that N2 is turned off. After N2 is turned off, the reference voltage falls to 0 V, and the second drive voltage $V_{G2}$ falls to 0 V accordingly, so that N2 continues to be turned off. The first drive voltage $V_{G1}$ is a divided voltage between the reference voltage $V_R$ and the second drive voltage $V_{G2}$. Because both the second drive voltage and the reference voltage are 0 V, the first drive voltage $V_{G1}$ is also 0 V, and further, N1 is turned off. Because N1 and N2 are turned off, the current inside the charging circuit 200 no longer flows from the internal voltage $V_{BUS}$ to the external voltage $V_{USB}$, and the external voltage $V_{USB}$ is 0.

Referring to FIG. 3A, an example of this application, which is not within the scope of the invention, discloses another charging circuit 300, including a switch circuit 301, a voltage divider circuit 302, and a gate driver 303. A structure and an operating principle of the gate driver 303 are the same as those of the gate driver 203 in FIG. 2A, a structure and an operating principle of the voltage divider circuit 302 are the same as those of the voltage divider circuit 202 in FIG. 2A, and a structure and an operating principle of the switch circuit 301 are different from those of the switch circuit 201 in FIG. 2A. Specifically, a structure of the charging circuit 300 in FIG. 3A is as follows:

The switch circuit 301 is separately connected to the voltage divider circuit 302 and the gate driver 303, and the switch circuit 303 includes a first switching transistor N1, a second switching transistor N2, and a third resistor R3.

A first terminal D1 of the first switching transistor N1 is connected to an external device (namely, a device other than an electronic device in which the charging circuit 300 is located), and the first terminal D1 of the first switching transistor N1 receives, during forward charging, an external voltage $V_{USB}$ provided by the external device, and provides the external voltage $V_{USB}$ for the external device for charging during reverse charging. A second terminal D2 of the first switching transistor N1 is connected to a second terminal of the second switching transistor N2. A control terminal of the first switching transistor N1 receives a first drive voltage $V_{G1}$.

The first drive voltage $V_{G1}$ is used to drive the first switching transistor N1 to be turned on or control N1 to be turned off. A reference voltage $V_R$ is a basis reference when the gate driver 303 adjusts a second drive voltage $V_{G2}$. The reference voltage $V_R$ is a voltage of a first terminal of the second switching transistor N2. The reference voltage $V_R$ is the voltage of the first terminal of the second switching transistor N2. When the reference voltage $V_R$ is the voltage of the first terminal of the second switching transistor N2, a difference between the second drive voltage and the reference voltage is equivalent to a value of a gate-source voltage of N2. Therefore, using the reference voltage as a reference to adjust the second drive voltage $V_{G2}$ can control N2 to be turned on or turned off.

The second terminal D2 of the first switching transistor N1 outputs an internal voltage $V_{BUS}$ during forward charging, and receives, during reverse charging, the internal voltage $V_{BUS}$ provided by an internal power supply of the electronic device.

The internal voltage $V_{BUS}$ is a voltage of an internal node of the electronic device, and the internal node of the electronic device may be connected to an internal component of the electronic device. The internal component may be a power component, for example, a battery, or may be a component that needs to be powered, for example, a display screen or a speaker. The external voltage $V_{USB}$ is a voltage of an external node of the electronic device, and the external node is connected to the external device. The external device may be a power supply device, for example, a power supply, or may be a component that needs to be powered, for example, a power bank or an external keyboard. The external node is the first terminal D1 of the first switching transistor N1, and the internal node is the second terminal D2 of the first switching transistor N1.

It should be noted that for related descriptions of the internal voltage $V_{BUS}$ and the external voltage $V_{BUS}$, refer to the foregoing content of the related descriptions of the internal voltage $V_{BUS}$ and the external voltage $V_{BUS}$ in FIG. 2A. Details are not described herein again.

A control terminal of the second switching transistor N2 receives the second drive voltage $V_{G2}$, and the first terminal of the second switching transistor N2 is grounded by using the third resistor R3. The first terminal of the second switching transistor N2 outputs the reference voltage $V_R$. The second drive voltage $V_{G2}$ is used to drive the second switching transistor N2 to be turned on or control N2 to be turned off.

It should be noted that the first switching transistor N1 may be understood as a switching transistor, or may be understood as an equivalent switching transistor obtained after a plurality of switching transistors are connected in parallel. Similarly, the second switching transistor N2 may also be understood as a switching transistor, or may be understood as an equivalent switching transistor obtained after a plurality of switching transistors are connected in parallel. That the plurality of switching transistors are connected in parallel means that gates of the plurality of switching transistors are connected, sources of the plurality of switching transistors are connected, and drains of the plurality of switching transistors are connected. Specifically, for a parallel structure between the plurality of switching transistors, refer to 2011 shown in FIG. 2A(2).

In some examples, the first switching transistor N1 is a Bi-GaN HEMT, and due to a characteristic of the Bi-GaN HEMT, each of the first terminal D1 and the second terminal D2 of the first switching transistor N1 can be used as a source or a drain. The control terminal of the first switching transistor N2 may be a gate.

In some examples, the second switching transistor N2 is a Si MOS transistor. The first terminal of the second switching transistor N2 may be a source, the second terminal may be a drain, and the control terminal may be a gate.

The voltage divider circuit 302 is separately connected to the gate driver 303 and the switch circuit 301, and the voltage divider circuit 302 includes a first resistor R1 and a second resistor R2. A first terminal of the first resistor R1 receives the reference voltage $V_R$, a second terminal of the first resistor R1 is connected to a first terminal of the second resistor R2, and a second terminal of the second resistor R2 receives the second drive voltage $V_{G2}$. A common terminal between the first resistor R1 and the second resistor R2 outputs the first drive voltage $V_{G1}$. A voltage value of the first drive voltage $V_{G1}$ is a divided voltage value of the voltage difference between the reference voltage $V_R$ and the second drive voltage $V_{G2}$. Specifically, $$V_{G1} = V_R + \frac{R1}{R1 + R2} \times (V_{G2} - V_R)$$.

It should be noted that R1 may be understood as a resistor, or R1 may be understood as an equivalent resistor obtained after a plurality of resistors are connected in series and/or in parallel, and a resistance value of R1 is a resistance value of the equivalent resistor. Similarly, R2 may also be understood as a resistor, or R2 may be understood as an equivalent resistor obtained after a plurality of resistors are connected in series and/or in parallel, and a resistance value of R2 is a resistance value of the equivalent resistor. For example, the second resistor R2 may also be shown in 202 in FIG. 2A(3), to be specific, a second resistor 2021 may be an equivalent resistor obtained after two resistors are connected in series.

It should be further noted that a specific structure in which a plurality of resistors are connected in series and/or in parallel is not limited in this application.

For related descriptions of composition, a structure, and a working principle of the voltage divider circuit 302, refer to the voltage divider circuit 202 shown in FIG. 2A.

The gate driver 303 is separately connected to the switch circuit 301 and the voltage divider circuit 302. The gate driver 303 is configured to: in a forward charging or reverse charging process, receive the reference voltage $V_R$ output by the switch circuit 301, and adjust a value of the second drive voltage $V_{G2}$ to a first target drive voltage value based on the reference voltage $V_R$, to control the second switching transistor N2 to be turned on. The second drive voltage $V_{G2}$ is a drive voltage used to control N2 to be turned on or turned off. The first target drive voltage value is a value of the second drive voltage that can enable N2 to be in an on state.

In some other examples, the gate driver 303 is further configured to: in a process of stopping forward charging or reverse charging, receive the reference voltage $V_R$ output by the switch circuit 301, and adjust the value of the second drive voltage $V_{G2}$ to a second target drive voltage value based on the reference voltage $V_R$, to control the second switching transistor N2 to be turned off. The second target drive voltage value is a value of the second drive voltage that can enable N2 to be in an off state.

For related descriptions of composition and a connection structure of the gate driver 303, refer to the gate driver 203 shown in FIG. 2A.

The following describes specific working processes of the charging circuit 300.

Working process of the charging circuit 300 in a forward charging time period:
Continuing to refer to FIG. 3A, in a forward charging scenario of the charging circuit 300, the gate driver 303 in the charging circuit 300 is configured to: receive the reference voltage $V_R$, and adjust the value of the second drive voltage $V_{G2}$ to the first target drive voltage value based on the reference voltage $V_R$, to control the second switching transistor N2 to be turned on.

For a process and a principle of adjusting the value of the second drive voltage $V_{G2}$ to the first target drive voltage value by the gate driver 303 based on the reference voltage $V_R$ in the forward charging scenario, refer to the process and the principle of the gate driver 203 in the forward charging time period in FIG. 2A. Details are not described herein again.

The first terminal of the first resistor R1 in the voltage divider circuit 302 receives the reference voltage $V_R$, the control terminal of the second switching transistor N2 receive the second drive voltage $V_{G2}$, the voltage between the reference voltage $V_R$ and the second drive voltage $V_{G2}$ is divided by using R1 and R2, to obtain the first drive voltage $V_{G1}$. The first drive voltage $V_{G1}$ is a divided voltage between the reference voltage $V_R$ and the second drive voltage $V_{G2}$, and the value of the first drive voltage $V_{G1}$ is $$V_{G1} = V_R + \frac{R1}{R1 + R2} \times (V_{G2} - V_R)$$. The first drive voltage $V_{G1}$ can control the first switching transistor N1 of the switch circuit 301 to be turned on or turned off.

It should be noted that for a working process and a principle of the voltage divider circuit 302 in the forward charging time period, refer to the working process and the principle of the voltage divider circuit 202 in the forward charging time period in FIG. 2A. Details are not described herein again.

In the forward charging scenario, the switch circuit 301 receives the external voltage $V_{USB}$ by using the first terminal of N1, receives the first drive voltage $V_{G1}$ by using the control terminal of N1, receives the second drive voltage $V_{G2}$ by using the control terminal of N2, and outputs the reference voltage $V_R$ to the gate driver 303 by using a common terminal between the first terminal of the second switching transistor N2 and the third resistor. The first switching transistor N1 is turned on under control of the first drive voltage $V_{G1}$, and the second switching transistor N2 is turned on under control of the second drive voltage $V_{G2}$. When the first switching transistor N1 and the second switching transistor N2 are turned on, the external voltage $V_{USB}$ passes through N1 that is turned on to obtain and output the internal voltage $V_{BUS}$. In other words, a current inside the charging circuit 200 flows from the external voltage $V_{USB}$ to the internal voltage $V_{BUS}$.

Because the value of the second drive voltage $V_{G2}$ output by the gate driver 303 is adjusted based on the reference voltage $V_R$, the value (namely, the difference between the second drive voltage and the reference voltage $V_R$) of the gate-source voltage applied to N2 can always be greater than a threshold voltage of N2, so that N2 is in the on state. For a specific process and principle of controlling the second switching transistor N2 to be turned on by the gate driver 303, refer to the foregoing process and principle of controlling N2 to be turned on by the gate driver 202 in FIG. 2A. Details are not described herein again.

For example, if the first target drive voltage value may be a sum of the reference voltage $V_R$ and a first drive value, a process of turning on N1 in the forward charging scenario is as follows: The second terminal D2 of N1 is a source of N1, a voltage of the second terminal D2 of N1 at an initial moment is 0, a value of a gate-source voltage (namely, a voltage between the control terminal of N1 and the second terminal D2 of N1) of N1 is equivalent to the value of the first drive voltage $V_{G1}$, and a calculation formula for the first drive voltage $V_{G1}$ is $$V_{G1} = V_R + \frac{R1}{R1 + R2} \times (V_{G2} - V_R).$$

Because N2 is turned on under control of the second drive voltage, the reference voltage is 0 V. Because the difference between the second drive voltage and the reference voltage is the first drive value, when proper R1 and R2 are selected, the value of the first drive voltage $V_{G1}$ may be greater than a threshold voltage of N1, so that N1 is turned on. After N1 is turned on, a voltage of the second terminal D2 of N1 is equal to a value of the external voltage $V_{USB}$. In this case, because the reference voltage $V_R$ is also equal to the value of the external voltage $V_{USB}$, the gate driver correspondingly adjusts the second drive voltage $V_{G2}$. When both N1 and N2 are turned on, the value of the voltage of the second terminal of N1 is equal to the reference voltage. Therefore, a calculation formula for a source voltage of N1 is $$V1 = \frac{R1}{R1 + R2} \times (V_{G2} - V_R).$$ It can be learned from the calculation formula for V1 that because the difference between the second drive voltage and the reference voltage is the first drive value, and is a fixed value, and resistance values of R1 and R2 remain unchanged, a value of V1 remains unchanged, and the first switching transistor N1 is still in the on state.

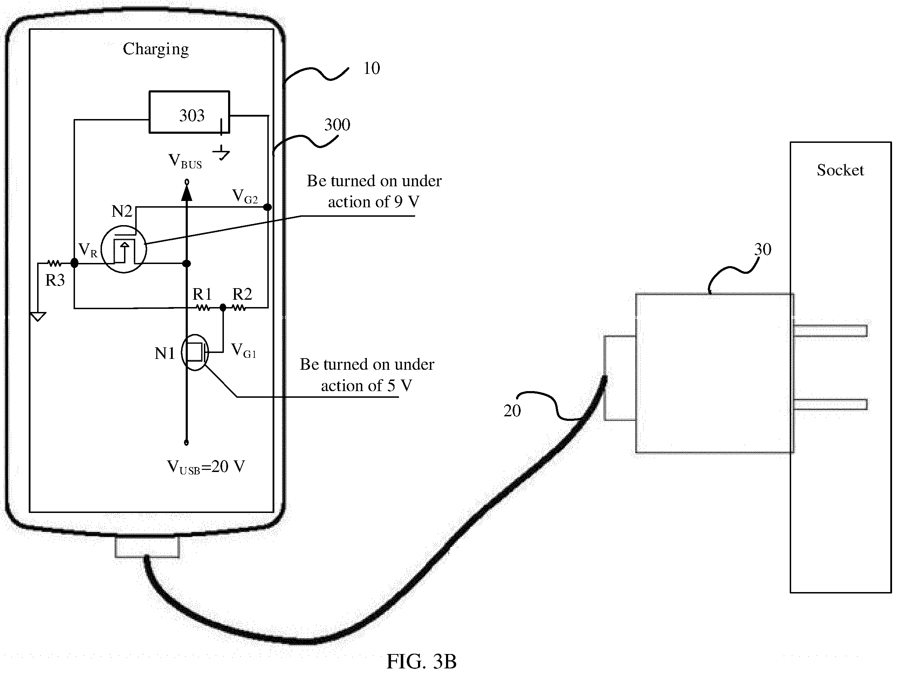

Specifically, referring to a scenario shown in FIG. 3B, the charging circuit 300 is applied to an A mobile phone 10. When the external voltage $V_{UBS}$ is 20 V, a ratio of the first resistor R1 to the second resistor R2 is 5:4, the first switching transistor N1 is a Bi-GaN HEMT, and the second switching transistor N2 is a Si MOS transistor, the charging circuit 300 can control the first switching transistor N1 to be turned on under action of a gate-source voltage of 5 V, and control the second switching transistor N2 to be turned on under action of a gate-source voltage of 9 V. It should be noted that N1 and N2 are in the on state when the gate-source voltages are greater than the threshold voltages. In the scenario shown in FIG. 3B, under control of $V_G$, the gate-source voltage of N1 is stable at 5 V, and the gate-source voltage of N2 is stable at 9 V, in other words, N1 is turned on and works stably under action of the gate-source voltage of 5 V, and N2 is turned on and works stably under action of the gate-source voltage of 9 V.

When N1 and N2 are turned on and work stably, as shown by an arrow in FIG. 3B, an external power supply provides the external voltage $V_{USB}$ for the charging circuit 300, and the internal voltage $V_{BUS}$ is output by using N1 that is turned on. On a branch on which the arrow is located, both the external voltage $V_{USB}$ and the internal voltage $V_{BUS}$ are 20 V. Because N2 is also in the on state, the reference voltage $V_R$ is also 20 V. To keep N1 and N2 turned on, the gate driver 303 adjusts the second drive voltage $V_{G2}$ to 29 V based on the reference voltage $V_R$. Therefore, the gate-source voltage of N2 is 9 V, and N2 is turned on and works under action of 9 V. In this case, because the second drive voltage $V_{G2}$ is 29 V, $V_R$ is 20 V, the ratio of the first resistor R1 to the second resistor R2 is 5:4, and the first drive voltage is $$V_{G1} = V_R + \frac{R1}{R1 + R2} \times (V_{G2} - V_R) = 20 + \frac{5}{9} \times 9 = 25,$$ the gate-source voltage of the first switching transistor N1 is calculated as $$V1 = \frac{R1}{R1 + R2} \times (V_{G2} - V_R) = 5,$$ and N1 is turned on and works under action of 5 V. When N1 is turned on, the charging circuit 300 may provide the internal voltage $V_{BUS}$ for the inside of the electronic device, to charge the inside of the electronic device, and the A mobile phone 10 is in a charging state.

It can be learned from the foregoing descriptions that in the charging circuit 300, the first drive voltage $V_{G1}$ controls the first switching transistor N1 to be turned on, and the second drive voltage $V_{G2}$ controls the second switching transistor N2 to be turned on. Because the voltage for controlling the first switching transistor N1 to be turned on and the voltage for controlling the second switching transistor N2 to be turned on may be different, a value of the gate-source voltage for driving the first switching transistor N1 to be turned on and a value of the gate-source voltage for driving the second switching transistor N2 to be turned on may also be different. In an actual application, based on respective characteristics of the first switching transistor N1 and the second switching transistor N2, a first drive voltage $V_{G1}$ that can enable the first switching transistor N1 to have smaller on impedance and lower power consumption may be selected, to control the first switching transistor N1 to be turned on, and similarly, a second drive voltage $V_{G2}$ that can enable the second switching transistor N2 to have smaller on impedance and lower power consumption may be selected, to control the second switching transistor N2 to be turned on. Because both the first switching transistor N1 and the second switching transistor N2 are turned on under action of drive voltages adapted to the first switching transistor N1 and the second switching transistor N2, on impedance of the charging circuit is reduced, and forward charging efficiency of the charging circuit is improved.

Compared with the charging circuit 200, the charging circuit 300 mainly differs in that the external voltage $V_{USB}$ is transmitted to a branch of the internal voltage $V_{BUS}$ that implements a forward charging action, and the current passes through only the first switching transistor N1. Because the branch passes through only one switching transistor, compared with the charging circuit 200, during forward charging, on impedance of the branch is smaller, forward charging efficiency is higher, and power consumption is lower.

(2) Working process of the charging circuit 300 in a forward turn-off time period:

When the electronic device to which the charging circuit 300 is applied is fully charged or the electronic device receives a charging stop instruction or the like, the charging circuit 300 needs to stop performing forward charging. Specifically, referring to FIG. 3A, in a forward turn-off scenario, the gate driver 303 in the charging circuit 300 receives the reference voltage $V_R$ output by the switch circuit 301, and adjusts the value of the second drive voltage VG2 to the second target drive voltage value based on the reference voltage $V_R$, to control the second switching transistor N2 to be turned off.

Specifically, for a principle and a working process of the gate driver 303 in the forward turn-off time period, refer to the principle and the working process of the gate driver 203 shown in FIG. 2A in the forward turn-off time period. Details are not described herein again.

The voltage divider circuit 302 receives the reference voltage $V_R$ by using the first terminal of the first resistor R1, receives the second drive voltage $V_{G2}$ by using the second terminal of the second resistor R2, and then divides the voltage between the reference voltage $V_R$ and the second drive voltage $V_{G2}$ by using R1 and R2, to obtain the first drive voltage $V_{G1}$. The first drive voltage $V_{G1}$ is a divided voltage between the reference voltage $V_R$ and the second drive voltage $V_{G2}$,

and the value of the first drive voltage $V_{G1}$ is $$V_{G1} = V_R + \frac{R1}{R1 + R2} \times (V_{G2} - V_R)$$ . The first drive voltage $V_{G1}$ can control the first switching transistor N1 of the switch circuit 301 to be turned off.

Specifically, for a principle in a working process of the voltage divider circuit 302 and the working process in the forward turn-off time period, refer to the principle in the working process of the voltage divider circuit 202 shown in FIG. 2A and the working process in the forward turn-off time period. Details are not described herein again.

In the forward turn-off scenario, the switch circuit 301 receives the external voltage $V_{USB}$ by using the first terminal D1 of N1, receives the first drive voltage $V_{G1}$ by using the control terminal of N1, receives the second drive voltage $V_{G2}$ by using the control terminal of N2, and outputs the reference voltage $V_R$ to the gate driver 303 by using a common terminal between the first terminal of the second switching transistor N2 and the third resistor. The second switching transistor N2 is turned off under control of the second drive voltage $V_{G2}$, and further, the first switching transistor N1 is also turned off under control of the first drive voltage $V_{G1}$. When the first switching transistor N1 is turned off, the external voltage $V_{USB}$ cannot pass through N1 to output a current, and therefore output of the internal voltage $V_{BUS}$ is stopped. In other words, the current inside the charging circuit 200 no longer flows from the external voltage $V_{USB}$ to the internal voltage $V_{BUS}$ through N1.

For example, if the gate driver 303 adjusts, in the forward turn-off scenario, the second drive voltage $V_{G2}$ to be equal to the reference voltage $V_R$, the gate-source voltage of N2 is 0, and N2 may be controlled to be in the off state. After N2 is turned off, the first terminal of N2 is grounded, and the reference voltage $V_R$ falls to 0 V. Therefore, the second drive voltage $V_{G2}$ also decreases with the reference voltage $V_R$, and also falls to 0 V. In addition, the first drive voltage $V_{G1}$ is a divided voltage between the second drive voltage $V_{G2}$ and the reference voltage $V_R$. When both the second drive voltage $V_{G2}$ and the reference voltage $V_R$ are 0 V, the first drive voltage $V_{G1}$ is also 0 V, and the first switching transistor N1 is turned off under control of the first drive voltage $V_{G1}$ of 0 V. Therefore, in the forward turn-off scenario, N2 is controlled, by using the second drive voltage, to be turned off, so that the first drive voltage can control N1 to be turned off.

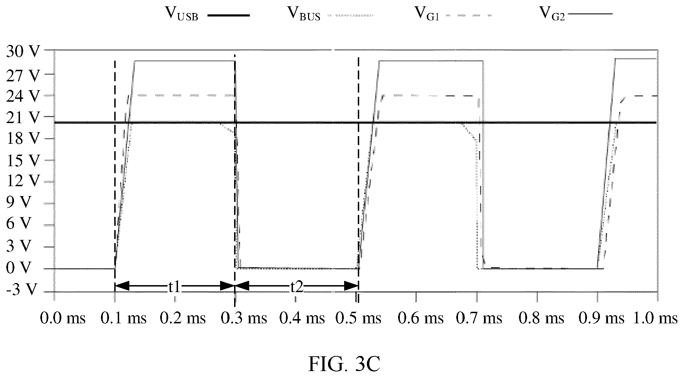

For example, in a scenario shown in FIG. 3B, the charging circuit 300 repeatedly performs a process of performing forward charging and then performing forward turn-off. A voltage change in the charging circuit 300 is shown in FIG. 3C. Specifically, referring to FIG. 3C, taking a forward charging phase t1 as an example, the external voltage $V_{USB}$ provided by an external power supply for the charging circuit 300 is 20 V, and the gate driver 303 adjusts the second drive voltage $V_{G2}$ to 29 V based on the reference voltage $V_R$. Because the first drive voltage $V_{G1}$ is a divided voltage between the second drive voltage $V_{G2}$ and the reference voltage $V_R$, and a ratio of the first resistor R1 to the second resistor R2 is 5:4. Therefore, the first drive voltage is 25 V. In this case, both N1 and N2 are in the on state, so that the external voltage $V_{USB}$

can pass through N1 that is turned on to output the internal voltage $V_{BUS}$ of 20 V. Taking a forward turn-off phase t2 as an example, the external voltage $V_{USB}$ received by the charging circuit 200 is 20 V, and the second drive voltage $V_{G2}$ falls to 0 V along with the reference voltage $V_R$ in the forward turn-off scenario, so that N1 is turned off. Because the first drive voltage is a divided voltage between the second drive voltage and the reference voltage, the first drive voltage also changes to 0 V, so that N1 is also turned off. Because N1 and N2 are turned off, the current inside the charging circuit 200 no longer flows from the external voltage $V_{USB}$ to the internal voltage $V_{BUS}$, and the internal voltage $V_{BUS}$ is 0.

(3) Working process of the charging circuit 300 in a reverse charging time period:

Continuing to refer to FIG. 3A, in a reverse charging scenario of the charging circuit 30, the gate driver 303 in the charging circuit 300 is configured to: receive the reference voltage $V_R$, and adjust the value of the second drive voltage $V_{G2}$ to the first target drive voltage value based on the reference voltage $V_R$, to control the second switching transistor N2 to be turned on.

For a working process and a principle of the gate driver 303 in the reverse charging time period, refer to the related descriptions of the gate driver 303 in the forward charging time period. Details are not described herein again.

In the reverse charging time period, the voltage divider circuit 302 receives the reference voltage $V_R$ by using the first terminal of the first resistor R1, receives the second drive voltage $V_{G2}$ by using the second terminal of the second resistor R2, and divides the voltage difference between the reference voltage $V_R$ and the second drive voltage $V_{G2}$ by using R1 and R2, to obtain the first drive voltage $V_{G1}$.

For a working process and a principle of the voltage divider circuit 302 in the reverse charging time period, refer to the related descriptions of the voltage divider circuit 302 in the forward charging time period. Details are not described herein again.

In the reverse charging scenario, the switch circuit 301 receives the internal voltage $V_{BUS}$ by using the second terminal of the first switching transistor N1, receives the first drive voltage $V_{G1}$ by using the control terminal of N1, receives the second drive voltage $V_{G2}$ by using the control terminal of N2, and outputs the reference voltage $V_R$ to the gate driver 303 by using the first terminal of N2. The first switching transistor N1 is turned on under control of the first drive voltage $V_{G1}$, and the second switching transistor N2 is turned on under control of the second drive voltage $V_{G2}$. When the first switching transistor N1 and the second switching transistor N2 are turned on, the internal voltage $V_{BUS}$ received by the second terminal of N1 passes through N1 that is turned on to output the external voltage $V_{USB}$ from the second terminal of N1. In other words, a current inside the charging circuit 300 flows from the internal voltage $V_{BUS}$ to the external voltage $V_{USB}$. For a turn-on process and a principle of the second switching transistor N2 in the reverse charging scenario, refer to the foregoing related descriptions of the process of turning on N2 in the forward charging scenario in FIG. 3A. Details are not described herein again.

In the reverse charging scenario, a process in which the first drive voltage $V_{G1}$ controls the first switching transistor N1 of the switch circuit 301 to be turned on is as follows: At an initial moment of reverse charging, N1 is in the off state. In this case, the first terminal D1 of N1 is used as a source of N1, a voltage of the first terminal D1 is initially 0 V, and no external voltage is output. In this case, the voltage divider circuit 202 provides the first drive voltage

$$V_{G1} = V_R + \frac{R1}{R1+R2} \times \left(V_{G2} - V_R\right)$$ for the control terminal of N1. Therefore, a gate-source voltage of N1 is

$V1 = V_{G1} - 0 = V_{G1}$. Because after N2 is turned on, the reference voltage is equal to the internal voltage $V_{BUS}$ provided by the inside of the electronic device, and the difference between the second drive voltage and the reference voltage is a first drive value, and is a fixed value, the first drive voltage $V_{G1}$ is greater than a threshold voltage of N1, so that N1 can be turned on. After N1 is turned on, a value of the first terminal of N1 is also equal to the internal voltage $V_{BUS}$. Therefore, the gate-source voltage of the first switching transistor N1 is $$V1 = V_{G1} - V_R = \frac{R1}{R1+R2} \times \left(V_{G2} - V_R\right)$$ . Because the difference between the second drive voltage and the reference voltage is the first drive value, and is a fixed value, when proper R1 and R2 are selected, V1 may be greater than the threshold voltage, so that N1 can continue to remain turned on.

It should be noted that a working process and a principle in the reverse charging scenario are similar to those during forward charging, and a main difference is that a current direction is opposite to that in the forward charging scenario, and is from the internal voltage $V_{BUS}$ to the external voltage $V_{USB}$. For the working process in the reverse charging scenario, also refer to the foregoing descriptions in the forward charging scenario in FIG. 3A

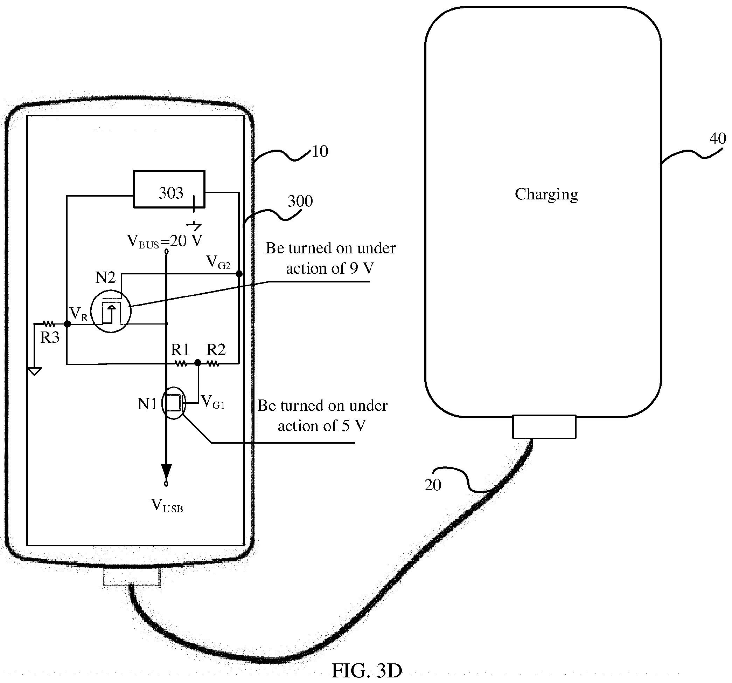

For example, referring to a scenario shown in FIG. 3D, the charging circuit 300 is applied to an A mobile phone 10. When the internal voltage $V_{BUS}$ is 20 V, a ratio of the first resistor R1 to the second resistor R2 is 5:4, the first switching transistor N1 is a Bi-GaN HEMT, and the second switching transistor N2 is a Si MOS transistor, the charging circuit 300 can control the first switching transistor N1 to be turned on under action of a gate-source voltage of 5 V, and control the second switching transistor N2 to be turned on under action of a gate-source voltage of 9 V. It should be noted that N1 and N2 are in the on state when the gate-source voltages are greater than threshold voltages. In the scenario shown in FIG. 3D, under control of $V_G$, the gate-source voltage of N1 is stable at 5 V, and the gate-source voltage of N2 is stable at 9 V, in other words, N1 is turned on and works stably under action of the gate-source voltage of 5 V, and N2 is turned on and works stably under action of the gate-source voltage of 9 V.

Specifically, when N1 and N2 are turned on and work stably, as shown by an arrow in FIG. 3D, an internal power supply of the electronic device provides the internal voltage $V_{BUS}$ for the charging circuit 300, and outputs the external voltage $V_{USB}$ by using N1 that is turned on. On a branch on which the arrow is located, the external voltage $V_{USB}$, the reference voltage $V_R$, and the internal voltage $V_{BUS}$ are all 20 V. To keep N1 and N2 opened, the gate driver 303 adjusts the second drive voltage $V_{G2}$ to the first target drive voltage value 29 V based on the reference voltage $V_R$, and therefore, the gate-source voltage of N2 is 9V, and N2 is turned on and works under action of 9 V. In this case, because $V_{G2}$ is 29 V, $V_R$ is 20 V, the ratio of the first resistor R1 to the second resistor R2 is 5:4, and the first drive voltage is

$$V_{G1} = V_R + \frac{R1}{R1+R2} \times (V_{G2} - V_R) = 20 + \frac{5}{9} \times (29 - 20) = 25$$

, the first drive voltage $V_{G1}$ is calculated as 25 V. Therefore, a value of the gate-source voltage V1 of the first switching transistor N1 is

$$V1 = \frac{R1}{R1+R2} \times (V_{G2} - V_R) = \frac{5}{9} \times (29 - 20) = 5$$

, in other words, N1 is turned on and works under action of 5 V.

It can be learned from the foregoing descriptions that in the charging circuit 300, in the reverse charging time period, the first drive voltage $V_{G1}$ controls the first switching transistor N1 to be turned on, and the second drive voltage $V_{G2}$ controls the second switching transistor N2 to be turned on. Because the voltage for controlling the first switching transistor N1 to be turned on and the voltage for controlling the second switching transistor N2 to be turned on may be different, a value of the gate-source voltage for driving the first switching transistor N1 to be turned on and a value of the gate-source voltage for driving the second switching transistor N2 to be turned on may also be different. In an actual application, based on respective characteristics of the first switching transistor N1 and the second switching transistor N2, a first drive voltage $V_{G1}$ that can enable the first switching transistor N1 to have smaller on impedance and lower power consumption may be selected, to control the first switching transistor N1 to be turned on, and similarly, a second drive voltage $V_{G2}$ that can enable the second switching transistor N2 to have smaller on impedance and lower power consumption may be selected, to control the second switching transistor N2 to be turned on. Because both the first switching transistor N1 and the second switching transistor N2 are turned on under action of drive voltages adapted to the first switching transistor N1 and the second switching transistor N2, on impedance of the charging circuit is reduced, and reverse charging efficiency of the charging circuit is improved.

Compared with the charging circuit 200, the charging circuit 300 mainly differs in that the internal voltage $V_{BUS}$ is transmitted to a branch of the external voltage $V_{USB}$ that implements a reverse charging action, and the current passes through only the first switching transistor N1. Because the branch passes through only one switching transistor, compared with the charging circuit 200, during reverse charging, on impedance of the branch is smaller, reverse charging efficiency is higher, and power consumption is lower.

(4) Working process of the charging circuit 300 in a reverse turn-off time period:

When the electronic device to which the charging circuit 300 is applied does not need to supply power to an external electronic device or the electronic device receives a power supply stop instruction or the like, the charging circuit 300 needs to stop performing reverse charging (in other words, perform reverse turn-off). Specifically, referring to FIG. 3A, in a reverse turn-off scenario, the gate driver 303 in the charging circuit 300 receives the reference voltage $V_R$ output by the switch circuit 301, and adjusts the value of the second drive voltage $V_{G2}$ to the second target drive voltage value based on the reference voltage $V_R$, to control the second switching transistor N2 to be turned off.

The second drive voltage $V_{G2}$ output by the gate driver 303 is output to the switch circuit 301, so that after receiving the second drive voltage $V_{G2}$, the switch circuit 301 controls, under control of the second drive voltage $V_{G2}$, the second switching transistor N2 to be turned off. The second drive voltage $V_{G2}$ output by the gate driver 303 is further received by the second terminal of the second resistor of the voltage divider circuit 302.

For a principle and a working process of the gate driver 303 in the reverse turn-off time period, refer to the principle and the working process of the gate driver 303 in the forward turn-off time period. Details are not described herein again.

In the reverse turn-off scenario, the voltage divider circuit 302 receives the reference voltage $V_R$ by using the first terminal of the first resistor R1, receives the second drive voltage $V_{G2}$ by using the second terminal of the second resistor R2, and divides the voltage difference between the reference voltage $V_R$ and the second drive voltage $V_{G2}$ by using R1 and R2, to obtain the first drive voltage $V_{G1}$. The first drive voltage $V_{G1}$ can control the first switching transistor N1 of the switch circuit 201 to be turned off.

For a working process and a principle of the voltage divider circuit 302 in the reverse turn-off scenario, refer to the working process and the principle of the voltage divider circuit 302 in the forward turn-off scenario. Details are not described herein again.

For a principle about why and a process in which the first drive voltage $V_{G1}$ can control the first switching transistor N1 of the switch circuit 301 to be turned off in the reverse turn-off time period, refer to the foregoing related content in which the first drive voltage $V_{G1}$ can control, in the forward turn-off scenario, the first switching transistor N1 of the switch circuit 301 to be turned off. Details are not described herein again.

For a principle about why and a process in which the second drive voltage $V_{G2}$ can control the second switching transistor N2 of the switch circuit 301 to be turned off in the reverse turn-off time period, refer to the foregoing related content in which the second drive voltage $V_{G2}$ can control, in the forward turn-off time period, the second switching transistor N2 of the switch circuit 301 to be turned off. Details are not described herein again.

In the reverse turn-off time period, the switch circuit 301 receives the internal voltage $V_{BUS}$ by using the second terminal D2 of N1, receives the first drive voltage $V_{G1}$ by using the control terminal of N1, receives the second drive voltage $V_{G2}$ by using the control terminal of N2, and outputs the reference voltage $V_R$ by using a common terminal between the first terminal of the second switching transistor N2 and the third resistor. The first switching transistor N1 is turned off under control of the first drive voltage $V_{G1}$, and the second switching transistor N2 is turned off under control of the second drive voltage $V_{G2}$. When the first switching transistor N1 and the second switching transistor N2 are turned off, the internal voltage $V_{BUS}$ cannot pass through N1 to obtain and output the external voltage $V_{USB}$. In other words, a current inside the charging circuit 300 no longer flows from the internal voltage $V_{BUS}$ to the external voltage $V_{USB}$.

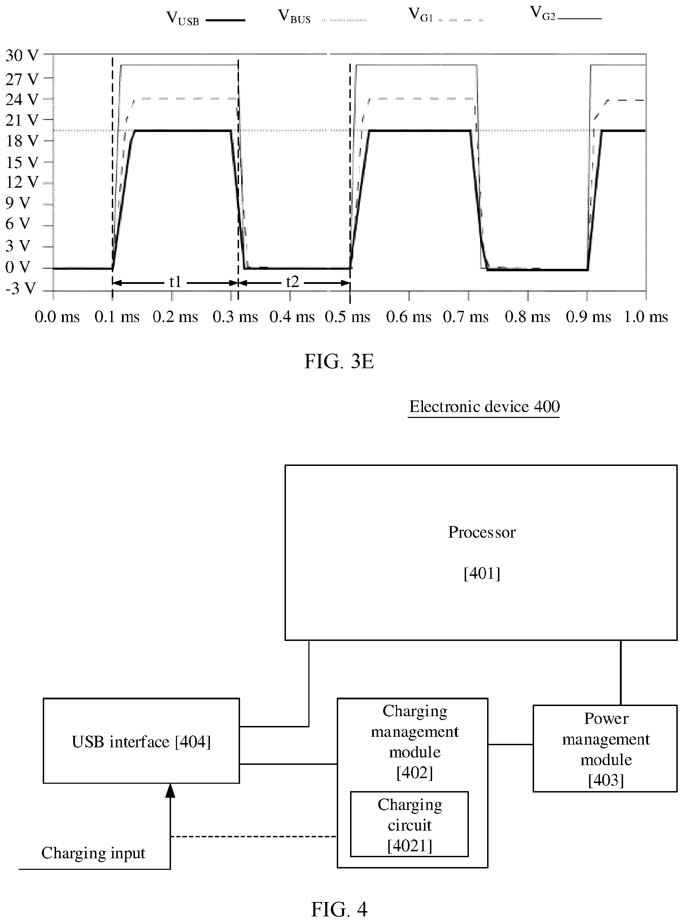

For example, in a scenario shown in FIG. 3D, the charging circuit 300 repeatedly performs a process of performing reverse charging and then performing reverse turn-off. A voltage change in the charging circuit 300 is shown in FIG. 3E. Specifically, referring to FIG. 3E, taking a reverse charging phase t1 as an example, the internal voltage $V_{BUS}$ received by the charging circuit 300 is 20 V, and the gate driver 303 adjusts the second drive voltage $V_{G2}$ to 29 V based on the reference voltage $V_R$. The first drive voltage $V_{G1}$ is a divided voltage between the reference voltage $V_R$ and the second drive voltage $V_{G2}$, and is 25 V. In this case, both N1 and N2 are in the on state, and therefore the internal voltage $V_{BUS}$ can pass through N1 that is turned on to output the external voltage $V_{USB}$ of 20 V. Taking a reverse turn-off phase t2 as an example, the internal voltage $V_{BUS}$ received by the charging circuit 300 is 20 V, and the second drive voltage $V_{G2}$ falls to 0 V along with the reference voltage $V_R$ in a scenario in which reverse charging is stopped, so that N2 is turned off. The first drive voltage $V_{G1}$ is a divided voltage between the second drive voltage $V_{G2}$ and the reference voltage $V_R$. Because both the second drive voltage $V_{G2}$ and the reference voltage $V_R$ fall to 0 V, the first drive voltage $V_{G1}$ also changes to 0 V, so that N1 is turned off. Because N1 is turned off, the current inside the charging circuit 300 no longer flows from the internal voltage $V_{BUS}$ to the external voltage $V_{USB}$, and the external voltage $V_{USB}$ is 0.

It can be learned from FIG. 2A and FIG. 3A that in both the charging circuit 200 and the charging circuit 300, the switch circuit can output the reference voltage to the gate driver in the forward charging time period, the reverse charging time period, the forward turn-off time period, or the reverse turn-off time period, and in the forward charging time period or the reverse charging time period, the switch circuit can control, by using the first drive voltage, the first switching transistor to be turned on, and control, by using the second drive voltage, the second switching transistor to be turned on. Therefore, both the first switching transistor N1 and the second switching transistor N2 are turned on, by using the first drive voltage and the second drive voltage that are different, under action of gate-source voltages suitable for the first switching transistor N1 and the second switching transistor N2, so that on impedance of the charging circuit is reduced, and bidirectional charging efficiency of the charging circuit is improved.

In the forward turn-off time period or the reverse turn-off time period, the switch circuit may further control, by using the first drive voltage, the first switching transistor to be turned off, and control, by using the second drive voltage, the second switching transistor to be turned off. When N1 and N2 are turned off, forward charging or reverse charging may be stopped.

Specifically, in the forward charging time period, the switch circuit in FIG. 2A receives the external voltage, and outputs the internal voltage to the inside of the electronic device by using the first switching transistor and the second switching transistor that are turned on, in the reverse charging time period, the switch circuit receives the internal voltage, and outputs the external voltage to the outside of the electronic device by using the first switching transistor and the second switching transistor that are turned on, in the forward turn-off time period, the switch circuit receives the external voltage, and stops outputting the internal voltage to the inside of the electronic device by using the first switching transistor and the second switching transistor that are turned off, and in the reverse turn-off time period, the switch circuit receives the internal voltage, and stops outputting the external voltage to the outside of the electronic device by using the first switching transistor and the second switching transistor that are turned off. In other words, the first switching transistor and the second switching transistor that are turned on need to be used to implement charging, and the first switching transistor and the second switching transistor that are turned off need to be used to implement turn-off.

In the forward charging time period, the switch circuit in FIG. 3A receives the external voltage, and outputs the internal voltage to the inside of the electronic device by using the first switching transistor that is turned on, in the reverse charging time period, the switch circuit receives the internal voltage, and outputs the external voltage to the outside of the electronic device by using the first switching transistor that is turned on, in the forward turn-off time period, the switch circuit receives the external voltage, and stops outputting the internal voltage to the inside of the electronic device by using the first switching transistor that is turned off, and in the reverse turn-off time period, the switch circuit receives the internal voltage, and stops outputting the external voltage to the outside of the electronic device by using the first switching transistor that is turned off. In other words, only the first switching transistor that is turned on needs to be used to implement charging, and only the second switching transistor that is turned off needs to be used to implement turn-off. It can be learned from FIG. 2A and FIG. 3A that in the forward charging time period, the reverse charging time period, the forward turn-off time period, or the reverse turn-off time period, the voltage divider circuits in FIG. 2A and FIG. 3A are configured to perform voltage division by using the reference voltage and the second drive voltage, to obtain and output the first drive voltage. It can be learned from FIG. 2A and FIG. 3A that the gate drivers in FIG. 2A and FIG. 3A adjust and output the second drive voltage based on the reference voltage in the forward charging time period or the reverse charging time period, and also adjust and output the second drive voltage based on the reference voltage in the forward turn-off time period or the reverse turn-off time period. However, specific manners of adjusting the second drive voltage in the charging time period and the turn-off time period are different. Specifically, in the forward charging time period or the reverse charging time period, the value of the second drive voltage is adjusted to the sum of the reference voltage and the first drive value, and the second drive voltage is output, but in the forward turn-off time period or the reverse turn-off time period, the value of the second drive voltage is adjusted to the value of the reference voltage, and the second drive voltage is output.

It can be learned based on the descriptions in FIG. 2A and FIG. 3A that in the charging circuit provided in the embodiments, the switch circuit is configured to: receive a power supply voltage and a plurality of drive voltages, and output a reference voltage and an output voltage of the charging circuit. The plurality of drive voltages include a first drive voltage and a second drive voltage. The voltage divider circuit is configured to: receive the second drive voltage and the reference voltage, and output the first drive voltage. The gate driver is configured to: receive the reference voltage, and output the second drive voltage.

The power supply voltage is a voltage supplying power to the charging circuit. The output voltage of the charging circuit is a voltage provided by the charging circuit for a component that needs to be powered. The power supply voltage may be the external voltage mentioned in FIG. 2A and FIG. 3A in a forward charging time period, and may be an internal voltage in a reverse charging time period. The output voltage of the charging circuit is the internal voltage in the forward charging time period, and is the external voltage in the reverse charging time period. The external voltage is a voltage of an external node in the charging circuit, and the internal voltage is a voltage of an internal node in the charging circuit. The power supply voltage is the external voltage in a forward turn-off time period, and is the internal voltage in a reverse turn-off time period. The output voltage of the charging circuit is the internal voltage in the forward turn-off time period, and is the external voltage in the reverse turn-off time period.

In embodiments of this application, the switch circuit can obtain the first drive voltage and the second drive voltage by using the gate driver and the voltage divider circuit, and voltage values of the first drive voltage and the second drive voltage may be different. Therefore, the switch circuit may use a proper first drive voltage and a proper second drive voltage, to reduce on impedance of the charging circuit and improve bidirectional charging efficiency of the charging circuit.

Based on the foregoing FIG. 2B, FIG. 2D, FIG. 3B, and FIG. 3D, an embodiment of this application further discloses a charging system. The charging system includes at least a first electronic device, the first electronic device includes a charging management module, and the charging management module includes any one of the charging circuits provided in the foregoing embodiments of this application. The charging system further includes a charger connected to the first electronic device and/or a second electronic device connected to the first electronic device. The charger connected to the first electronic device is configured to output a power supply voltage to the first electronic device, and the second electronic device connected to the first electronic device is configured to receive an output voltage of the charging circuit.

Referring to FIG. 4, an embodiment of this application further discloses an electronic device 400. The electronic device 400 may be a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, or the like. The electronic device 400 includes a processor 401, a charging management module 402, a power management module 403, and a USB interface 404. The charging management module 402 includes a charging circuit 4021.

It may be understood that the structure illustrated in this embodiment does not constitute a specific limitation on the electronic device 400. In some other embodiments, the electronic device 400 may include more or fewer components than those shown in the figure, or may combine some components, or may split some components, or may have different component arrangements. The components shown in the figure may be implemented by using hardware, software, or a combination of software and hardware.

The processor 401 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. For example, in this application, the processor 401 may control the charging circuit 4021 to perform forward charging, reverse charging, stop forward charging, or stop reverse charging.

The charging management module 402 is configured to: receive, from the charger, an external voltage $V_{USB}$ input through charging, or provide an external voltage $V_{USB}$ to the outside. The charger may be a wireless charger or a wired charger. In some embodiments of wired charging, the charging management module 402 may receive, by using the USB interface 404, the external voltage $V_{USB}$ input by the wired charger through charging, or provide the external voltage $V_{USB}$ to the outside. In this embodiment of this application, the charging circuit 4021 in the charging management module 402 may be configured to: receive the external voltage $V_{USB}$ input through charging, and input the internal voltage $V_{BUS}$, and may also be configured to: receive the internal voltage $V_{BUS}$, and output the external voltage $V_{USB}$. Specifically, for a specific working process, principle, and structure of the charging circuit 4021, refer to the foregoing charging circuit 200 shown in FIG. 2A and the foregoing charging circuit 300 shown in FIG. 3A. Details are not described herein again.

The power management module 403 is configured to connect to a battery, the charging management module 402, and the processor 401. In this embodiment of this application, the power management module 403 receives the internal voltage $V_{BUS}$ input by the charging management module 402, and supplies power to the processor, an internal memory, a display screen, a camera, or the like, or receives the internal voltage $V_{BUS}$ input by the battery, and inputs the internal voltage $V_{BUS}$ to the charging management module 402.

The USB interface 404 is an interface that complies with USB standard specifications, and may be specifically a Mini USB interface, a Micro USB interface, a USB Type C interface, or the like. In this embodiment of this application, the USB interface 404 may be configured to connect to a charger to provide the external voltage $V_{USB}$ for the charging circuit 4021, and may also be configured to receive the external voltage $V_{USB}$ output by the charging circuit 4021.

Through the descriptions of the foregoing implementations, a person skilled in the art may clearly understand that, for the purpose of convenient and brief description, only division of the foregoing functional modules is used as an example for description. In an actual application, the functions may be allocated to and completed by different functional modules based on a requirement. In other words, an internal structure of the apparatus is divided into different functional modules, to complete all or some of the functions described above. For a specific working process of the system, apparatus, and unit described above, refer to a corresponding process in the foregoing method embodiments. Details are not described herein again.

In the several embodiments provided in the embodiments, it should be understood that the disclosed system, apparatus, and method may be implemented in other manners. For example, the described apparatus embodiment is merely an example. For example, the module or unit division is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separated, and components displayed as units may or may not be physical units, in other words, may be located in one place, or may be distributed on a plurality of network units. Some or all of the units may be selected based on actual requirements to achieve the objectives of the solutions in embodiments. In addition, functional units in the embodiments may be integrated into one processing unit, or each of the units may exist alone physically, or two or more units may be integrated into one unit.

The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of the embodiments essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in the embodiments. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any change or replacement made within the technical scope disclosed in this application shall fall within the protection scope of this application. Therefore, the protection scope of this application shall be subject to the protection scope of the claims.

**Claims**

1. An electronic device comprising a charging circuit (200), the charging circuit (200) comprising:

   a switch circuit (201), a voltage divider circuit (202), and a gate driver (203), wherein the switch circuit (201) comprises a first switching transistor (N1) and a second switching transistor (N2), the first switching transistor (N1) and the second switching transistor (N2) are different types of switching transistors, wherein the switch circuit (201) is separately connected to the voltage divider circuit (202) and the gate driver (203), and the voltage divider circuit (202) is connected to the gate driver (203), wherein

   the switch circuit (201) is configured to: receive a power supply voltage and a plurality of drive voltages, and output a reference voltage ($V_R$) and an output voltage of the charging circuit (200), wherein the plurality of drive voltages comprise a first drive voltage ($V_{G1}$) and a second drive voltage ($V_{G2}$);

   the voltage divider circuit (202) is configured to: receive the second drive voltage ($V_{G2}$) and the reference voltage ($V_R$), and output the first drive voltage ($V_{G1}$); and

   the gate driver (203) is configured to: receive the reference voltage ($V_R$), and output the second drive voltage ($V_{G2}$), wherein a voltage value of the second drive voltage ($V_{G2}$) is different from a voltage value of the first drive voltage ($V_{G1}$), wherein the reference voltage ($V_R$) is a basis reference when the gate driver (203) adjusts the second drive voltage ($V_{G2}$), and wherein a control terminal of the first switching transistor (N1) is configured to receive the first drive voltage ($V_{G1}$), a first terminal (D1) of the first switching transistor (N1) is an external node, and a second terminal (D2) of the first switching transistor (N1) is connected to a first terminal of the second switching transistor (N2); and

   a control terminal of the second switching transistor (N2) is configured to receive the second drive voltage ($V_{G2}$), the first terminal of the second switching transistor (N2) is configured to output the reference voltage ($V_R$), a second terminal of the second switching transistor (N2) is an internal node, a voltage of the external node is an external voltage ($V_{USB}$), and a voltage of the internal node is an internal voltage ($V_{BUS}$).

2. The electronic device according to claim 1, wherein when receiving the second drive voltage ($V_{G2}$) and the reference voltage ($V_R$), and outputting the first drive voltage ($V_{G1}$), the voltage divider circuit (202) is configured to:
   receive the second drive voltage ($V_{G2}$) and the reference voltage ($V_R$), and perform voltage division on the second drive voltage ($V_{G2}$) and the reference voltage ($V_R$) to obtain the first drive voltage ($V_{G1}$).

3. The electronic device according to claim 2, wherein the voltage divider circuit (202) comprises:

   a first resistor (R1) and a second resistor (R2), wherein
   a first terminal of the first resistor (R1) is configured to receive the reference voltage ($V_R$), and the first terminal of the first resistor(R1) is connected to a first terminal of the second resistor (R2); and
   the first terminal of the second resistor (R2) is configured to receive the second drive voltage ($V_{G2}$), and a common terminal between the first resistor (R1) and the second resistor (R2) outputs the first drive voltage ($V_{G1}$).

4. The electronic device according to any one of claims 1 to 3, wherein when receiving the reference voltage ($V_R$), and outputting the second drive voltage ($V_{G2}$), the gate driver (203) is configured to:
   receive the reference voltage ($V_R$), adjust the second drive voltage ($V_{G2}$) based on the reference voltage ($V_R$), and output the second drive voltage ($V_{G2}$).

5. The electronic device according to any one of claims 1 to 4, wherein when receiving the reference voltage ($V_R$), and outputting the second drive voltage ($V_{G2}$), the gate driver (203) is configured to:
   adjust the second drive voltage ($V_{G2}$) to a first target drive value based on the reference voltage ($V_R$) and output the second drive voltage ($V_{G2}$) in a forward charging time period or a reverse charging time period.

6. The electronic device according to claim 5, wherein the first target drive value is a sum of the reference voltage ($V_R$) and a first drive value ($V_{G1}$).

7. The electronic device according to claim 5 or 6, wherein the gate driver (203) is further configured to:
   adjust the second drive voltage ($V_{G2}$) to a second target drive value based on the reference voltage ($V_R$) and output the second drive voltage ($V_{G2}$) in a forward turn-off time period or a reverse turn-off time period.

8. The electronic device according to claim 7, wherein the second target drive value is equal to the reference voltage ($V_R$).

9. The electronic device according to any one of claims 1 to 8, wherein when receiving the power supply voltage and the plurality of drive voltages, and outputting the reference voltage ($V_R$) and the output voltage of the charging circuit (200), the switch circuit (201) is configured to:
receive the power supply voltage and the plurality of drive voltages and output the reference voltage ($V_R$) and the output voltage of the charging circuit (200) under control of the plurality of drive voltages in the forward charging time period or the reverse charging time period.

10. The electronic device according to claim 9, wherein when receiving the power supply voltage and the plurality of drive voltages and outputting the reference voltage ($V_R$) and the output voltage of the charging circuit (200) under control of the plurality of drive voltages in the forward charging time period or the reverse charging time period, the switch circuit (201) is configured to:

receive the external voltage ($V_{USB}$) and the plurality of drive voltages and output the reference voltage ($V_R$) and the internal voltage ($V_{BUS}$) under control of the plurality of drive voltages in the forward charging time period; and
receive the internal voltage ($V_{BUS}$) and the plurality of drive voltages and output the reference voltage ($V_R$) and the external voltage ($V_{USB}$) under control of the plurality of drive voltages in the reverse charging time period, wherein the power supply voltage is the external voltage ($V_{USB}$) in the forward charging time period, and is the internal voltage ($V_{BUS}$) in the reverse charging time period, the output voltage of the charging circuit (200) is the internal voltage ($V_{BUS}$) in the forward charging time period, and is the external voltage ($V_{USB}$) in the reverse charging time period.

11. The electronic device according to claim 9 or 10, wherein the switch circuit (201) is further configured to:
receive the power supply voltage and the plurality of drive voltages and stop outputting the reference voltage ($V_R$) and the output voltage of the charging circuit (200) under control of the plurality of drive voltages in the forward turn-off time period or the reverse turn-off time period.

12. The electronic device according to claim 11, wherein when receiving the power supply voltage and the plurality of drive voltages and stopping outputting the reference voltage ($V_R$) and the output voltage of the charging circuit (200) under control of the plurality of drive voltages in the forward turn-off time period or the reverse turn-off time period, the switch circuit (201) is configured to:

receive the external voltage ($V_{USB}$) and the plurality of drive voltages and stop outputting the reference voltage ($V_R$) of the charging circuit (200) and the internal voltage ($V_{BUS}$) under control of the plurality of drive voltages in the forward turn-off time period; and
receive the internal voltage ($V_{BUS}$) and the plurality of drive voltages and stop outputting the reference voltage ($V_R$) and the external voltage ($V_{USB}$) under control of the plurality of drive voltages in the reverse turn-off time period, wherein
the power supply voltage is the external voltage ($V_{USB}$) in the forward turn-off time period, and is the internal voltage ($V_{BUS}$) in the reverse turn-off time period, the output voltage of the charging circuit (200) is the internal voltage ($V_{BUS}$) in the forward turn-off time period, and is the external voltage ($V_{USB}$) in the reverse turn-off time period.

13. The electronic device according to claim 12, wherein when receiving the external voltage ($V_{USB}$) and the plurality of drive voltages and outputting the reference voltage ($V_R$) and the internal voltage ($V_{BUS}$) under control of the plurality of drive voltages in the forward charging time period, the switch circuit (201) is configured to:

receive the external voltage ($V_{USB}$) and the plurality of drive voltages and output the reference voltage ($V_R$) and the internal voltage ($V_{BUS}$) by using the turned-on first switching transistor (N1) and the turned-on second switching transistor (N2) in the forward charging time period, wherein the first switching transistor (N1) is turned on under control of the first drive voltage ($V_{G1}$), and the second switching transistor (N2) is turned on under control of the second drive voltage ($V_{G2}$); and
when receiving the internal voltage ($V_{BUS}$) and the plurality of drive voltages and outputting the reference voltage ($V_R$) and the external voltage ($V_{USB}$) under control of the plurality of drive voltages in the reverse charging time period, the switch circuit (201) is configured to:
receive the internal voltage ($V_{BUS}$) and the plurality of drive voltages and output the reference voltage ($V_R$) and the external voltage ($V_{USB}$) by using the turned-on first switching transistor (N1) and the turned-on second switching transistor (N2) in the reverse charging time period, wherein the first switching transistor (N1) is turned on under control of the first drive voltage ($V_{G1}$), and the second switching transistor (N2) is turned on under control of the second drive voltage ($V_{G2}$).

14. The electronic device according to claim 12 or 13, wherein when receiving the external voltage ($V_{USB}$) and the plurality of drive voltages and stopping outputting the reference voltage ($V_R$) of the charging circuit (200) and the internal voltage ($V_{BUS}$) under control of the plurality of drive voltages in the forward turn-off time period, the switch circuit (201) is configured to:

receive the external voltage ($V_{USB}$) and the plurality of drive voltages and stop outputting the reference voltage ($V_R$) and the internal voltage ($V_{BUS}$) by using the turned-off first switching transistor (N1) and the turned-off second switching transistor (N2) in the forward turn-off time period, wherein the first switching transistor (N1) is turned off under control of the first drive voltage ($V_{G1}$), and the second switching transistor (N2) is turned off under control of the second drive voltage ($V_{G2}$); and

when receiving the internal voltage ($V_{BUS}$) and the plurality of drive voltages and stopping outputting the reference voltage ($V_R$) and the external voltage ($V_{USB}$) under control of the plurality of drive voltages in the reverse turn-off time period, the switch circuit (201) is configured to:

receive the internal voltage ($V_{BUS}$) and the plurality of drive voltages and stop outputting the reference voltage ($V_R$) and the external voltage ($V_{USB}$) by using the turned-off first switching transistor (N1) and the turned-off second switching transistor (N2) in the reverse turn-off time period, wherein the first switching transistor (N1) is turned off under control of the first drive voltage ($V_{G1}$), and the second switching transistor (N2) is turned off under control of the second drive voltage ($V_{G2}$).

15. A charging system, wherein the charging system comprises at least a first electronic device according to any one of claims 1 to 14; and a charger connected to the first electronic device and/or a second electronic device connected to the first electronic device, wherein

the charger connected to the first electronic device is configured to output the power supply voltage to the first electronic device; and

the second electronic device connected to the first electronic device is configured to receive an output voltage of the charging circuit (200).

**Patentansprüche**

1. Elektronische Vorrichtung, umfassend eine Ladeschaltung (200), wobei die Ladeschaltung (200) umfasst:

eine Schalterschaltung (201), eine Spannungsteilerschaltung (202) und einen Gate-Treiber (203), wobei die Schalterschaltung (201) einen ersten Schalttransistor (N1) und einen zweiten Schalttransistor (N2) umfasst, wobei der erste Schalttransistor (N1) und der zweite Schalttransistor (N2) unterschiedliche Arten von Schalttransistoren sind, wobei die Schalterschaltung (201) separat mit der Spannungsteilerschaltung (202) und dem Gate-Treiber (203) verbunden ist und die Spannungsteilerschaltung (202) mit dem Gate-Treiber (203) verbunden ist, wobei

die Schalterschaltung (201) dazu konfiguriert ist: eine Versorgungsspannung und eine Vielzahl von Treiberspannungen zu empfangen und eine Referenzspannung ($V_R$) und eine Ausgangsspannung der Ladeschaltung (200) auszugeben, wobei die Vielzahl von Treiberspannungen eine erste Treiberspannung ($V_{G1}$) und eine zweite Treiberspannung ($V_{G2}$) umfasst;

die Spannungsteilerschaltung (202) dazu konfiguriert ist: die zweite Treiberspannung ($V_{G2}$) und die Referenzspannung ($V_R$) zu empfangen und die erste Treiberspannung ($V_{G1}$) auszugeben; und

der Gate-Treiber (203) dazu konfiguriert ist: die Referenzspannung ($V_R$) zu empfangen und die zweite Treiberspannung ($V_{G2}$) auszugeben, wobei ein Spannungswert der zweiten Treiberspannung ($V_{G2}$) von einem Spannungswert der ersten Treiberspannung ($V_{G1}$) verschieden ist, wobei die Referenzspannung ($V_R$) eine Basisreferenz ist, wenn der Gate-Treiber (203) die zweite Treiberspannung ($V_{G2}$) anpasst, und wobei ein Steueranschluss des ersten Schalttransistors (N1) dazu konfiguriert ist, die erste Treiberspannung ($V_{G1}$) zu empfangen, ein erster Anschluss (D1) des ersten Schalttransistors (N1) ein externer Knoten ist und ein zweiter Anschluss (D2) des ersten Schalttransistors (N1) mit einem ersten Anschluss des zweiten Schalttransistors (N2) verbunden ist; und

ein Steueranschluss des zweiten Schalttransistors (N2) dazu konfiguriert ist, die zweite Treiberspannung ($V_{G2}$) zu empfangen, der erste Anschluss des zweiten Schalttransistors (N2) dazu konfiguriert ist, die Referenzspannung ($V_R$) auszugeben, ein zweiter Anschluss des zweiten Schalttransistors (N2) ein interner Knoten ist, eine Spannung des externen Knotens eine externe Spannung ($V_{USB}$) ist und eine Spannung des internen Knotens eine interne Spannung ($V_{BUS}$) ist.

2. Elektronische Vorrichtung nach Anspruch 1, wobei beim Empfangen der zweiten Treiberspannung ($V_{G2}$) und der Referenzspannung ($V_R$) und beim Ausgeben der ersten Treiberspannung ($V_{G1}$) die Spannungsteilerschaltung (202) dazu konfiguriert ist:
die zweite Treiberspannung ($V_{G2}$) und die Referenzspannung ($V_R$) empfangen und eine Spannungteilung an der zweiten Treiberspannung ($V_{G2}$) und der Referenzspannung ($V_R$) durchführen, um die erste Treiberspannung ($V_{G1}$) zu erhalten.

3. Elektronische Vorrichtung nach Anspruch 2, wobei die Spannungsteilerschaltung (202) Folgendes umfasst:

einen ersten Widerstand (R1) und einen zweiten Widerstand (R2), wobei
ein erster Anschluss des ersten Widerstands (R1) konfiguriert ist, um die Referenzspannung ($V_R$) zu empfangen, und der erste Anschluss des ersten Widerstands (R1) mit einem ersten Anschluss des zweiten Widerstands (R2) verbunden ist; und
der erste Anschluss des zweiten Widerstands (R2) konfiguriert ist, um die zweite Treiberspannung ($V_{G2}$) zu empfangen, und ein gemeinsamer Anschluss zwischen dem ersten Widerstand (R1) und dem zweiten Widerstand (R2) die erste Treiberspannung ($V_{G1}$) ausgibt.

4. Elektronische Vorrichtung nach einem der Ansprüche 1 bis 3, wobei beim Empfangen der Referenzspannung ($V_R$) und beim Ausgeben der zweiten Treiberspannung ($V_{G2}$) der Gate-Treiber (203) konfiguriert ist zum:
Empfangen der Referenzspannung ($V_R$), Anpassen der zweiten Treiberspannung ($V_{G2}$) basierend auf der Referenzspannung ($V_R$) und Ausgeben der zweiten Treiberspannung ($V_{G2}$).

5. Elektronische Vorrichtung nach einem der Ansprüche 1 bis 4, wobei beim Empfangen der Referenzspannung ($V_R$) und beim Ausgeben der zweiten Treiberspannung ($V_{G2}$) der Gate-Treiber (203) konfiguriert ist zum:
Anpassen der zweiten Treiberspannung ($V_{G2}$) auf einen ersten Zieltreiberwert basierend auf der Referenzspannung ($V_R$) und Ausgeben der zweiten Treiberspannung ($V_{G2}$) in einem Vorwärtsladezeitraum oder einem Rückwärtsladezeitraum.

6. Elektronische Vorrichtung nach Anspruch 5, wobei der erste Zieltreiberwert eine Summe aus der Referenzspannung ($V_R$) und einem ersten Treiberwert ($V_{G1}$) ist.

7. Elektronische Vorrichtung nach Anspruch 5 oder 6, wobei der Gate-Treiber (203) ferner konfiguriert ist zum:
Anpassen der zweiten Treiberspannung ($V_{G2}$) auf einen zweiten Zieltreiberwert basierend auf der Referenzspannung ($V_R$) und Ausgeben der zweiten Treiberspannung ($V_{G2}$) in einem Vorwärtsausschaltzeitraum oder einem Rückwärtsausschaltzeitraum.

8. Elektronische Vorrichtung nach Anspruch 7, wobei der zweite Zieltreiberwert gleich der Referenzspannung ($V_R$) ist.

9. Elektronische Vorrichtung nach einem der Ansprüche 1 bis 8, wobei beim Empfangen der Versorgungsspannung und der Vielzahl von Treiberspannungen und beim Ausgeben der Referenzspannung ($V_R$) und der Ausgangsspannung der Ladeschaltung (200) die Schaltschaltung (201) konfiguriert ist zum:
Empfangen der Versorgungsspannung und der Vielzahl von Treiberspannungen und Ausgeben der Referenzspannung ($V_R$) und der Ausgangsspannung der Ladeschaltung (200) unter Steuerung der Vielzahl von Treiberspannungen in dem Vorwärtsladezeitraum oder dem Rückwärtsladezeitraum.

10. Elektronische Vorrichtung nach Anspruch 9, wobei beim Empfangen der Versorgungsspannung und der Vielzahl von Treiberspannungen und beim Ausgeben der Referenzspannung ($V_R$) und der Ausgangsspannung der Ladeschaltung (200) unter Steuerung der Vielzahl von Treiberspannungen in dem Vorwärtsladezeitraum oder dem Rückwärtsladezeitraum die Schaltschaltung (201) konfiguriert ist zum:

Empfangen der externen Spannung ($V_{USB}$) und der Vielzahl von Treiberspannungen und Ausgeben der Referenzspannung ($V_R$) und der internen Spannung ($V_{BUS}$) unter Steuerung der Vielzahl von Treiberspannungen in dem Vorwärtsladezeitraum; und
Empfangen der internen Spannung ($V_{BUS}$) und der Vielzahl von Treiberspannungen und Ausgeben der Referenzspannung ($V_R$) und der externen Spannung ($V_{USB}$) unter Steuerung der Vielzahl von Treiberspannungen in dem Rückwärtsladezeitraum, wobei die Versorgungsspannung die externe Spannung ($V_{USB}$) in dem Vorwärtsladezeitraum ist und die interne Spannung ($V_{BUS}$) in dem Rückwärtsladezeitraum ist, wobei die Ausgangsspannung der Ladeschaltung (200) die interne Spannung ($V_{BUS}$) in dem Vorwärtsladezeitraum ist und die externe Spannung ($V_{USB}$) in dem Rückwärtsladezeitraum ist.

11. Elektronische Vorrichtung nach Anspruch 9 oder 10, wobei die Schaltschaltung (201) ferner konfiguriert ist zum: Empfangen der Versorgungsspannung und der Vielzahl von Treiberspannungen und Stoppen des Ausgebens der Referenzspannung ($V_R$) und der Ausgangsspannung der Ladeschaltung (200) unter Steuerung der Vielzahl von Treiberspannungen in dem Vorwärtsabschaltzeitraum oder dem Rückwärtsabschaltzeitraum.

12. Elektronische Vorrichtung nach Anspruch 11, wobei beim Empfangen der Versorgungsspannung und der Vielzahl von Treiberspannungen und beim Stoppen des Ausgebens der Referenzspannung ($V_R$) und der Ausgangsspannung der Ladeschaltung (200) unter Steuerung der Vielzahl von Treiberspannungen in dem Vorwärtsabschaltzeitraum oder dem Rückwärtsabschaltzeitraum die Schaltschaltung (201) konfiguriert ist zum:

die externe Spannung ($V_{USB}$) und die Vielzahl von Treiberspannungen empfangen und das Ausgeben der Referenzspannung ($V_R$) der Ladeschaltung (200) und der internen Spannung ($V_{BUS}$) unter der Steuerung der Vielzahl von Treiberspannungen in dem Vorwärts-Ausschaltzeitraum stoppen; und
die interne Spannung ($V_{BUS}$) und die Vielzahl von Treiberspannungen empfangen und das Ausgeben der Referenzspannung ($V_R$) und der externen Spannung ($V_{USB}$) unter der Steuerung der Vielzahl von Treiberspannungen in dem Rückwärts-Ausschaltzeitraum stoppen, wobei
die Stromversorgungsspannung die externe Spannung ($V_{USB}$) in dem Vorwärts-Ausschaltzeitraum ist und die interne Spannung ($V_{BUS}$) in dem Rückwärts-Ausschaltzeitraum ist, die Ausgangsspannung der Ladeschaltung (200) die interne Spannung ($V_{BUS}$) in dem Vorwärts-Ausschaltzeitraum ist und die externe Spannung ($V_{USB}$) in dem Rückwärts-Ausschaltzeitraum ist.

13. Elektronische Vorrichtung nach Anspruch 12, wobei beim Empfangen der externen Spannung ($V_{USB}$) und der Vielzahl von Treiberspannungen und Ausgeben der Referenzspannung ($V_R$) und der internen Spannung ($V_{BUS}$) unter der Steuerung der Vielzahl von Treiberspannungen in dem Vorwärts-Ladezeitraum die Schaltschaltung (201) dazu konfiguriert ist:

die externe Spannung ($V_{USB}$) und die Vielzahl von Treiberspannungen empfangen und die Referenzspannung ($V_R$) und die interne Spannung ($V_{BUS}$) unter Verwendung des eingeschalteten ersten Schalttransistors (N1) und des eingeschalteten zweiten Schalttransistors (N2) in dem Vorwärts-Ladezeitraum ausgeben, wobei der erste Schalttransistor (N1) unter der Steuerung der ersten Treiberspannung ($V_{G1}$) eingeschaltet ist und der zweite Schalttransistor (N2) unter der Steuerung der zweiten Treiberspannung ($V_{G2}$) eingeschaltet ist; und
beim Empfangen der internen Spannung ($V_{BUS}$) und der Vielzahl von Treiberspannungen und Ausgeben der Referenzspannung ($V_R$) und der externen Spannung ($V_{USB}$) unter der Steuerung der Vielzahl von Treiberspannungen in dem Rückwärts-Ladezeitraum die Schaltschaltung (201) dazu konfiguriert ist:
die interne Spannung ($V_{BUS}$) und die Vielzahl von Treiberspannungen empfangen und die Referenzspannung ($V_R$) und die externe Spannung ($V_{USB}$) unter Verwendung des eingeschalteten ersten Schalttransistors (N1) und des eingeschalteten zweiten Schalttransistors (N2) in dem Rückwärts-Ladezeitraum ausgeben, wobei der erste Schalttransistor (N1) unter der Steuerung der ersten Treiberspannung ($V_{G1}$) eingeschaltet ist und der zweite Schalttransistor (N2) unter der Steuerung der zweiten Treiberspannung ($V_{G2}$) eingeschaltet ist.

14. Elektronische Vorrichtung nach Anspruch 12 oder 13, wobei die Schaltschaltung (201) beim Empfangen der externen Spannung ($V_{USB}$) und der Vielzahl von Ansteuerspannungen und beim Stoppen der Ausgabe der Referenzspannung ($V_R$) der Ladeschaltung (200) und der internen Spannung ($V_{BUS}$) unter Steuerung der Vielzahl von Ansteuerspannungen im Vorwärts-Ausschaltzeitraum dazu konfiguriert ist:

die externe Spannung ($V_{USB}$) und die Vielzahl von Ansteuerspannungen zu empfangen und die Ausgabe der Referenzspannung ($V_R$) und der internen Spannung ($V_{BUS}$) durch Verwendung des ausgeschalteten ersten Schalttransistors (N1) und des ausgeschalteten zweiten Schalttransistors (N2) im Vorwärts-Ausschaltzeitraum zu stoppen, wobei der erste Schalttransistor (N1) unter Steuerung der ersten Ansteuerspannung ($V_{G1}$) ausgeschaltet ist und der zweite Schalttransistor (N2) unter Steuerung der zweiten Ansteuerspannung ($V_{G2}$) ausgeschaltet ist; und
beim Empfangen der internen Spannung ($V_{BUS}$) und der Vielzahl von Ansteuerspannungen und beim Stoppen der Ausgabe der Referenzspannung ($V_R$) und der externen Spannung ($V_{USB}$) unter Steuerung der Vielzahl von Ansteuerspannungen im Rückwärts-Ausschaltzeitraum die Schaltschaltung (201) dazu konfiguriert ist:

die interne Spannung (V$_{BUS}$) und die Vielzahl von Ansteuerspannungen zu empfangen und die Ausgabe der Referenzspannung (V$_R$) und der externen Spannung (V$_{USB}$) durch Verwendung des ausgeschalteten ersten Schalttransistors (N1) und des ausgeschalteten zweiten Schalttransistors (N2) im Rückwärts-Ausschaltzeitraum zu stoppen, wobei der erste Schalttransistor (N1) unter Steuerung der ersten Ansteuerspannung (V$_{G1}$) ausgeschaltet ist und der zweite Schalttransistor (N2) unter Steuerung der zweiten Ansteuerspannung (V$_{G2}$) ausgeschaltet ist.

15. Ladesystem, wobei das Ladesystem mindestens eine erste elektronische Vorrichtung nach einem der Ansprüche 1 bis 14; und ein Ladegerät, das mit der ersten elektronischen Vorrichtung verbunden ist, und/oder eine zweite elektronische Vorrichtung umfasst, die mit der ersten elektronischen Vorrichtung verbunden ist, wobei

das mit der ersten elektronischen Vorrichtung verbundene Ladegerät dazu konfiguriert ist, die Stromversorgungsspannung an die erste elektronische Vorrichtung auszugeben; und
die mit der ersten elektronischen Vorrichtung verbundene zweite elektronische Vorrichtung dazu konfiguriert ist, eine Ausgangsspannung der Ladeschaltung (200) zu empfangen.

**Revendications**

1. Dispositif électronique comprenant un circuit de charge (200), le circuit de charge (200) comprenant :

un circuit de commutation (201), un circuit diviseur de tension (202) et un pilote de grille (203), dans lequel le circuit de commutation (201) comprend un premier transistor de commutation (N1) et un second transistor de commutation (N2), le premier transistor de commutation (N1) et le second transistor de commutation (N2) étant des types différents de transistors de commutation, dans lequel le circuit de commutation (201) est connecté séparément au circuit diviseur de tension (202) et au pilote de grille (203), et le circuit diviseur de tension (202) est connecté au pilote de grille (203), dans lequel
le circuit de commutation (201) est configuré pour : recevoir une tension d'alimentation et une pluralité de tensions de commande, et délivrer en sortie une tension de référence (V$_R$) et une tension de sortie du circuit de charge (200), dans lequel la pluralité de tensions de commande comprend une première tension de commande (V$_{G1}$) et une seconde tension de commande (V$_{G2}$) ;
le circuit diviseur de tension (202) est configuré pour : recevoir la seconde tension de commande (V$_{G2}$) et la tension de référence (V$_R$), et délivrer en sortie la première tension de commande (V$_{G1}$) ; et
le pilote de grille (203) est configuré pour : recevoir la tension de référence (V$_R$), et délivrer en sortie la seconde tension de commande (V$_{G2}$), dans lequel une valeur de tension de la seconde tension de commande (V$_{G2}$) est différente d'une valeur de tension de la première tension de commande (V$_{G1}$), dans lequel la tension de référence (V$_R$) est une référence de base lorsque le pilote de grille (203) ajuste la seconde tension de commande (V$_{G2}$), et dans lequel une borne de commande du premier transistor de commutation (N1) est configurée pour recevoir la première tension de commande (V$_{G1}$), une première borne (D1) du premier transistor de commutation (N1) est un nœud externe, et une seconde borne (D2) du premier transistor de commutation (N1) est connectée à une première borne du second transistor de commutation (N2) ; et
une borne de commande du second transistor de commutation (N2) est configurée pour recevoir la seconde tension de commande (V$_{G2}$), la première borne du second transistor de commutation (N2) est configurée pour délivrer en sortie la tension de référence (V$_R$), une seconde borne du second transistor de commutation (N2) est un nœud interne, une tension du nœud externe est une tension externe (V$_{USB}$), et une tension du nœud interne est une tension interne (V$_{BUS}$).

2. Dispositif électronique selon la revendication 1, dans lequel, lors de la réception de la seconde tension de commande (V$_{G2}$) et de la tension de référence (V$_R$), et de la délivrance en sortie de la première tension de commande (V$_{G1}$), le circuit diviseur de tension (202) est configuré pour :
recevoir la deuxième tension de commande (V$_{G2}$) et la tension de référence (V$_R$), et effectuer une division de tension sur la deuxième tension de commande (V$_{G2}$) et la tension de référence (V$_R$) pour obtenir la première tension de commande (V$_{G1}$).

3. Le dispositif électronique selon la revendication 2, dans lequel le circuit diviseur de tension (202) comprend :

une première résistance (R1) et une deuxième résistance (R2), dans lequel
une première borne de la première résistance (R1) est configurée pour recevoir la tension de référence (V$_R$), et la première borne de la première résistance (R1) est connectée à une première borne de la deuxième résistance (R2) ; et

la première borne de la deuxième résistance (R2) est configurée pour recevoir la deuxième tension de commande ($V_{G2}$), et une borne commune entre la première résistance (R1) et la deuxième résistance (R2) fournit en sortie la première tension de commande ($V_{G1}$).

4. Le dispositif électronique selon l'une quelconque des revendications 1 à 3, dans lequel, lors de la réception de la tension de référence ($V_R$) et de la fourniture en sortie de la deuxième tension de commande ($V_{G2}$), le pilote de grille (203) est configuré pour :

recevoir la tension de référence ($V_R$), ajuster la deuxième tension de commande ($V_{G2}$) sur la base de la tension de référence ($V_R$), et fournir en sortie la deuxième tension de commande ($V_{G2}$).

5. Le dispositif électronique selon l'une quelconque des revendications 1 à 4, dans lequel, lors de la réception de la tension de référence ($V_R$) et de la fourniture en sortie de la deuxième tension de commande ($V_{G2}$), le pilote de grille (203) est configuré pour :

ajuster la deuxième tension de commande ($V_{G2}$) à une première valeur de commande cible sur la base de la tension de référence ($V_R$) et fournir en sortie la deuxième tension de commande ($V_{G2}$) dans une période de temps de charge directe ou une période de temps de charge inverse.

6. Le dispositif électronique selon la revendication 5, dans lequel la première valeur de commande cible est une somme de la tension de référence ($V_R$) et d'une première valeur de commande ($V_{G1}$).

7. Le dispositif électronique selon la revendication 5 ou 6, dans lequel le pilote de grille (203) est en outre configuré pour :
ajuster la deuxième tension de commande ($V_{G2}$) à une deuxième valeur de commande cible sur la base de la tension de référence ($V_R$) et fournir en sortie la deuxième tension de commande ($V_{G2}$) dans une période de temps de blocage direct ou une période de temps de blocage inverse.

8. Le dispositif électronique selon la revendication 7, dans lequel la deuxième valeur de commande cible est égale à la tension de référence ($V_R$).

9. Le dispositif électronique selon l'une quelconque des revendications 1 à 8, dans lequel, lors de la réception de la tension d'alimentation et de la pluralité de tensions d'attaque, et de la fourniture en sortie de la tension de référence ($V_R$) et de la tension de sortie du circuit de charge (200), le circuit de commutation (201) est configuré pour :
recevoir la tension d'alimentation et la pluralité de tensions d'attaque et fournir en sortie la tension de référence ($V_R$) et la tension de sortie du circuit de charge (200) sous la commande de la pluralité de tensions d'attaque dans la période de temps de charge directe ou la période de temps de charge inverse.

10. Le dispositif électronique selon la revendication 9, dans lequel, lors de la réception de la tension d'alimentation et de la pluralité de tensions d'attaque et de la fourniture en sortie de la tension de référence ($V_R$) et de la tension de sortie du circuit de charge (200) sous la commande de la pluralité de tensions d'attaque dans la période de temps de charge directe ou la période de temps de charge inverse, le circuit de commutation (201) est configuré pour :

recevoir la tension externe ($V_{USB}$) et la pluralité de tensions d'attaque et fournir en sortie la tension de référence ($V_R$) et la tension interne ($V_{BUS}$) sous la commande de la pluralité de tensions d'attaque dans la période de temps de charge directe ; et
recevoir la tension interne ($V_{BUS}$) et la pluralité de tensions d'attaque et fournir en sortie la tension de référence ($V_R$) et la tension externe ($V_{USB}$) sous la commande de la pluralité de tensions d'attaque dans la période de temps de charge inverse, dans lequel la tension d'alimentation est la tension externe ($V_{USB}$) dans la période de temps de charge directe, et est la tension interne ($V_{BUS}$) dans la période de temps de charge inverse, la tension de sortie du circuit de charge (200) est la tension interne ($V_{BUS}$) dans la période de temps de charge directe, et est la tension externe ($V_{USB}$) dans la période de temps de charge inverse.

11. Le dispositif électronique selon la revendication 9 ou 10, dans lequel le circuit de commutation (201) est en outre configuré pour :
recevoir la tension d'alimentation et la pluralité de tensions d'attaque et arrêter de fournir en sortie la tension de référence ($V_R$) et la tension de sortie du circuit de charge (200) sous la commande de la pluralité de tensions d'attaque dans la période de temps de blocage directe ou la période de temps de blocage inverse.

**12.** Le dispositif électronique selon la revendication 11, dans lequel, lors de la réception de la tension d'alimentation et de la pluralité de tensions d'attaque et de l'arrêt de la fourniture en sortie de la tension de référence ($V_R$) et de la tension de sortie du circuit de charge (200) sous la commande de la pluralité de tensions d'attaque dans la période de temps de blocage directe ou la période de temps de blocage inverse, le circuit de commutation (201) est configuré pour :

recevoir la tension externe ($V_{USB}$) et la pluralité de tensions de commande et arrêter de délivrer la tension de référence ($V_R$) du circuit de charge (200) et la tension interne ($V_{BUS}$) sous la commande de la pluralité de tensions de commande dans la période de temps de blocage direct ; et

recevoir la tension interne ($V_{BUS}$) et la pluralité de tensions de commande et arrêter de délivrer la tension de référence ($V_R$) et la tension externe ($V_{USB}$) sous la commande de la pluralité de tensions de commande dans la période de temps de blocage inverse, dans lequel

la tension d'alimentation est la tension externe ($V_{USB}$) dans la période de temps de blocage direct, et est la tension interne ($V_{BUS}$) dans la période de temps de blocage inverse, la tension de sortie du circuit de charge (200) est la tension interne ($V_{BUS}$) dans la période de temps de blocage direct, et est la tension externe ($V_{USB}$) dans la période de temps de blocage inverse.

**13.** Dispositif électronique selon la revendication 12, dans lequel lors de la réception de la tension externe ($V_{USB}$) et de la pluralité de tensions de commande et de la délivrance de la tension de référence ($V_R$) et de la tension interne ($V_{BUS}$) sous la commande de la pluralité de tensions de commande dans la période de temps de charge directe, le circuit de commutation (201) est configuré pour :

recevoir la tension externe ($V_{USB}$) et la pluralité de tensions de commande et délivrer la tension de référence ($V_R$) et la tension interne ($V_{BUS}$) en utilisant le premier transistor de commutation (N1) à l'état passant et le second transistor de commutation (N2) à l'état passant dans la période de temps de charge directe, dans lequel le premier transistor de commutation (N1) est rendu passant sous la commande de la première tension de commande ($V_{G1}$), et le second transistor de commutation (N2) est rendu passant sous la commande de la seconde tension de commande ($V_{G2}$) ; et

lors de la réception de la tension interne ($V_{BUS}$) et de la pluralité de tensions de commande et de la délivrance de la tension de référence ($V_R$) et de la tension externe ($V_{USB}$) sous la commande de la pluralité de tensions de commande dans la période de temps de charge inverse, le circuit de commutation (201) est configuré pour :

recevoir la tension interne ($V_{BUS}$) et la pluralité de tensions de commande et délivrer la tension de référence ($V_R$) et la tension externe ($V_{USB}$) en utilisant le premier transistor de commutation (N1) à l'état passant et le second transistor de commutation (N2) à l'état passant dans la période de temps de charge inverse, dans lequel le premier transistor de commutation (N1) est rendu passant sous la commande de la première tension de commande ($V_{G1}$), et le second transistor de commutation (N2) est rendu passant sous la commande de la seconde tension de commande ($V_{G2}$).

**14.** Dispositif électronique selon la revendication 12 ou 13, dans lequel, lors de la réception de la tension externe ($V_{USB}$) et de la pluralité de tensions de commande et de l'arrêt de la sortie de la tension de référence ($V_R$) du circuit de charge (200) et de la tension interne ($V_{BUS}$) sous la commande de la pluralité de tensions de commande dans la période de temps de blocage direct, le circuit de commutation (201) est configuré pour :

recevoir la tension externe ($V_{USB}$) et la pluralité de tensions de commande et arrêter la sortie de la tension de référence ($V_R$) et de la tension interne ($V_{BUS}$) en utilisant le premier transistor de commutation bloqué (N1) et le second transistor de commutation bloqué (N2) dans la période de temps de blocage direct, dans lequel le premier transistor de commutation (N1) est bloqué sous la commande de la première tension de commande ($V_{G1}$), et le second transistor de commutation (N2) est bloqué sous la commande de la seconde tension de commande ($V_{G2}$) ; et

lors de la réception de la tension interne ($V_{BUS}$) et de la pluralité de tensions de commande et de l'arrêt de la sortie de la tension de référence ($V_R$) et de la tension externe ($V_{USB}$) sous la commande de la pluralité de tensions de commande dans la période de temps de blocage inverse, le circuit de commutation (201) est configuré pour :

recevoir la tension interne ($V_{BUS}$) et la pluralité de tensions de commande et arrêter la sortie de la tension de référence ($V_R$) et de la tension externe ($V_{USB}$) en utilisant le premier transistor de commutation bloqué (N1) et le second transistor de commutation bloqué (N2) dans la période de temps de blocage inverse, dans lequel le premier transistor de commutation (N1) est bloqué sous la commande de la première tension de commande ($V_{G1}$), et le second transistor de commutation (N2) est bloqué sous la commande de la seconde tension de commande ($V_{G2}$).

15. Système de charge, dans lequel le système de charge comprend au moins un premier dispositif électronique selon l'une quelconque des revendications 1 à 14 ; et un chargeur connecté au premier dispositif électronique et/ou un second dispositif électronique connecté au premier dispositif électronique, dans lequel

le chargeur connecté au premier dispositif électronique est configuré pour délivrer la tension d'alimentation au premier dispositif électronique ; et
le second dispositif électronique connecté au premier dispositif électronique est configuré pour recevoir une tension de sortie du circuit de charge (200).

Charging circuit 101

$V_{BUS}$

$V_R$ 1101

$V_G$

M2

M1

$V_{USB}$

FIG. 1A

EP 4 336 700 B1

Charging

Be turned on and work under action of 5 V

Be turned on and work under action of 5 V

$V_{BUS}$

$V_R$

1101

$V_G$

M2

M1

$V_{USB}$

10

101

Socket

30

20

FIG. 1B

Be turned on and work under action of 5 V

Be turned on and work under action of 5 V

$V_{BUS}$

$V_R$ | 1101

$V_G$

M2

M1

$V_{USB}$

10

101

Charging

40

20

FIG. 1C

EP 4 336 700 B1

Charging circuit 200

$V_R$

201

$V_{USB}$

D1    D2        N2        $V_{BUS}$

N1

R1    202

$V_{G1}$

R2    $V_{G2}$

203

(1)

201

2011

$V_{USB}$        D1                    N2        $V_{BUS}$

D2

$V_{G1}$

(2)

R1

202

2021

(3)

FIG. 2A

FIG. 2B

Socket

Charging

Be turned on and work under action of 9 V

Be turned on and work under action of 5 V

$V_{BUS}$

$V_R$

N2

D2

R1

N1

D1

R2

$V_{G2}$

$V_{G1}$

$V_{USB} = 20$ V

203

10

200

30

20

FIG. 2C

FIG. 2D

FIG. 2E

Charging circuit 300

FIG. 3A

Charging

303

$V_{BUS}$

N2

$V_{G2}$

Be turned on under
action of 9 V

$V_R$

R3

R1 R2

N1 $V_{G1}$

Be turned on under
action of 5 V

$V_{USB}$=20 V

10

300

30

20

Socket

FIG. 3B

FIG. 3C

FIG. 3D

V_USB ——— V_BUS .......... V_G1 — — — V_G2 ———

FIG. 3E

Electronic device 400

Processor

[401]

USB interface [404]

Charging input

Charging
management
module
[402]

Charging
circuit
[4021]

Power
management
module
[403]

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200395846 A1